# EUROPEAN PATENT APPLICATION

(11) **EP 2 465 815 A1**
(43) Date of publication of application: **20.06.2012**
(21) Application number: 11189208.9
(22) Date of filing: 15.11.2011
(51) Int. Cl.: B67D 3/00

(54) **Water server employing improved mechanism for exchanging water bottle**

(30) Priority: 17.12.2010 WO PCT/JP2010/073480
(71) Applicant: O-Ken Water Corporation, Tamba, Hyogo 669-4141 (JP)
(72) Inventor: Ogino, Norio, Tamba, Hyogo 6694141 (JP)
(74) Representative: Horn Kleimann Waitzhofer

(57) **Abstract**

When the water bottle (10) is in the inversion condition and in the basic state, the distance between the opening (11) of the water bottle (10) supported by the water bottle supporting portion (110) and the water bottle connector (120) supported by the water bottle connector supporting portion (130) becomes the normal distance for connecting the opening and water bottle connector appropriately. In the water bottle exchange operation, the distance between the opening (11) of the water bottl(10) supported by the water bottle supporting portion (110) and the water bottle connector (120) supported by the water bottle connector supporting portion (130) becomes large according to the drawing operation of the used water bottle (10) in the front direction, finally the water bottle connector (120) is disconnected from the opening (11), the detaching operation of the water bottle can be completed. The attaching operation of the water bottle can be completed by the opposite operation.

## Description

### Technical Field

This invention relates to a water server employing a mechanism for exchanging a water bottle and serving water or hot water from the water bottle by user operation. It is used for not only commercial use but also general use in homes and offices. The water server can serve various liquids including mineral water, hot water, various beverage, coffee, tea, green tea, soup and so on.

### Background Art

The water server has become popular. The water server employs a mechanism for exchanging a water bottle and serves water or hot water from the water bottle by user operation.

The conventional popular water server installs a water bottle on the top of the apparatus housing and supplies water from the water bottle to the faucet via the water serving route by utilizing gravity.

For example, as shown in Fig.23, the configuration water server shown in the patent application JP 2010-63799 includes a water supply unit 20 for accepting the water bottle 22 on the top, a powder container 50 for containing powder for beverage, and a beverage making unit 30 including a mixture device 80 for mixing the water supplied from the water bottle 20 and the powder supplied from the powder container 50.

In the water server shown in JP 2010-63799, the water bottle 22 is installed on the top of the housing, and gravity can be used for supplying the water from the water bottle 22 to the beverage making unit 30.

The conventional water server shown above is desirable for reducing the power consumption of the apparatus by utilizing gravity for supplying water via the water route. However, there is a serious demerit from increasing the load on the user for exchanging the water bottle installed on the top housing. The water bottle is installed on the top of the housing, so user should disconnect the empty used water bottle from the top of the apparatus housing and should position and connect the new water bottle on the top of the apparatus housing for the water bottle exchanging procedure. The user needs to work for lifting the water bottle up to the top of the apparatus housing. The water bottle filled with water is very heavy, so the large power is required for lifting and setting the water bottle to the top of the apparatus housing. However, the water bottle is too heavy to lift for the people such as ladies, children, senior citizens and those with an injured the lower back. This is a big problem for the conventional water server users. In addition, there is a problem from the safety point of view. The center of gravity of the apparatus shifts to the upper portion because the heavy water bottle is installed on the top of the apparatus housing, so the apparatus becomes unstable.

In order to solve the above-mentioned problem, the water server in which the water bottle position is located in the lower portion of the apparatus housing is known in the prior art.

The water server in which the water bottle position is located in the lower portion of the apparatus housing is shown in JP 2001-153523. As shown in Fig.24, the water bottle 5 (reference number shown in Fig.24) is set on the bottom of the apparatus housing, the water pipe 62 pumps the water from the water bottle 5 to the faucet via the water route by a pump. As shown above, if the water bottle 5 is arrayed on the bottom of the apparatus housing, there is no need for the user to lift the heavy water bottle up to the apparatus housing shown in JP 2010-63799. The required load on the user in exchanging the water bottle is disconnecting the used water bottle 5 from the bottom of the apparatus and connecting the new water bottle 5 to the bottom of the apparatus. In addition, the above-mentioned problem from the safety point of view is solved by lowering the center of gravity of the apparatus to the lower portion because the heavy water bottle is installed on the bottom of the apparatus, so the apparatus becomes stable and not prone to falling down easily even at the time of the earthquake.
Prior art 1 : JP 2010-63799
Prior art 2 : JP 2001-153523

### Disclosure of the invention

### The problems to be solved

As shown above, if the water bottle is installed on the bottom of the apparatus, there is no load on the user in exchanging the water bottle for lifting the heavy water bottle up to the apparatus housing, the center of gravity of the apparatus can be shift to the lower portion, and the apparatus becomes stable so as not to fall down easily.

However, the water server shown in JP 2001-153523 has the following problems.

The first problem is the hygiene point of view. In the water server shown in JP 2001-153523, the water bottle is installed on the bottom of the apparatus. However, the water bottle is just put on the bottom of the apparatus, the opening of the watering bottle faces up and the water pipe 62 for pumping water is just inserted from top of the water bottle through the opening. If the water bottle is positioned in the normal state in which the opening faces up, the water pipe 62 should be long enough to be inserted from the top opening to the bottom of the water bottle in order to pump the all contained water. Therefore, there is a hygiene problem because the water pipe is inserted deeply and directly in the water bottle, and careful maintenance of the water pipe should be necessary.

On the other hand, the conventional water server shown in JP 2010-63799, the water bottle is installed on the top of the apparatus in the inversion condition. Therefore, there is less hygiene problem because the water bottle connector connected from the beneath of the water bottle to the opening in the inversion condition and the inner water can be supplied by utilizing the gravity, so there is no need for the water pipe to be inserted directly and deeply in the water bottle.

However, if it is supposed that the combination of the configuration of the water server shown in JP 2001-15323 in which the water bottle is put on the bottom, and the configuration of the water server shown in JP 2010-63799 in which the water bottle is installed on the top of the apparatus in the inverted condition, such combination has serious problem on the water bottle exchange operation. It is difficult for the user to connect and set the water bottle in the inversion condition to the water bottle connector at the lower and inner position of the apparatus.

If the water bottle is put on the bottom in the water server, it is not necessary for the user to lift the water bottle up to the top of the apparatus in the water bottle exchange operation. However, if the water bottle is in the inverted condition, the opening of the water bottle is located at the lowest position near the floor. As a result, the water bottle itself interrupts the user's view of the opening of water bottle, so it is difficult for user to connect the opening of the water bottle and the water bottle connector without watching the opening of the water bottle directly. In addition, if the water bottle is put inside the housing, the housing wall interrupts the user's view, and it is difficult to put a hand inside of the housing. As a result, the workability is deteriorated.

JP 2001-153523 indicates utilization of the cart on the bottom of the apparatus to put the water bottle on. The water bottle can be drawn easily by the cart. However, if the water bottle is installed in the inversion condition and connected with the water bottle connector in the inner of the housing, it will be difficult to draw the water bottle enough to the front direction. While connecting the water bottle to the water bottle connector, it is possible to move the water bottle a short distance in the front direction. However, the connection portion is hidden inside of the apparatus if the water bottle is in the inversion condition. As a result, the workability is deteriorated.

Therefore, it is an object of the present invention to provide a water server that can achieve both the benefit of decreasing the load of the water bottle lifting operation by installing the water bottle on the bottom of the apparatus and the benefit from the hygiene point of view by connecting the water bottle in the inverted state to the water bottle connector directly. In addition, it is an object of the present invention to provide a water server that can improve the workability of the water bottle exchanging by employing the improved mechanism for water bottle exchanging.

### Means for solving the problems

In order to achieve the above-mentioned object, the present invention of a water server which can serve drinkable water from a water bottle installed in the exchangeable status comprises; a water bottle supporting portion for supporting the water bottle in the inverted condition; a water bottle connector supporting portion for supporting a water bottle connector for taking the drinkable water from the water bottle by connecting through an opening of the water bottle; a water bottle connector attaching and detaching mechanism for controlling the distance between the opening of the water bottle supported by the water bottle supporting portion and the water bottle connector supported by the water bottle connector supporting portion and for controlling attaching and detaching the water bottle and the water bottle supporting portion; wherein the attaching and detaching control of the water bottle supporting portion and the water bottle connector supporting portion is coupled to the drawing motion for drawing the water bottle in the front direction and the push back motion for pushing back the water bottle in the back direction by the water bottle connector attaching and detaching mechanism, and the water bottle can be attached to and detached from the water bottle connector corresponding to the water bottle drawing operation and the water bottle push back operation.

As the water bottle drawing operation and the water bottle push back operation, there are several types are possible. One is the sliding motion type for sliding the water bottle in the front direction and in the back direction. Another is the rotating motion type for pulling and skewing the water bottle in the front direction and for pushing back and standing upright the water bottle in the back direction.

In the configuration of the water server as the slide motion type, the water bottle connector attaching and detaching mechanism comprises; a unit slide mechanism for sliding a unit including the water bottle supporting portion and the water bottle connector supporting portion in the front direction and in the back direction; and an attaching and detaching slide mechanism for relatively moving the water bottle and the water bottle connector as facing to each other, wherein the sliding motion by the unit slide mechanism and the attaching and detaching motion of the water bottle and the water bottle connector by the attaching and detaching slide mechanism are correlated with each other, and the water bottle can be attached to and detached from the water bottle connector by the water bottle sliding operation in the front direction and in the back direction.

It is preferable that the attaching and detaching slide mechanism comprises a connection structure including first connection parts installed in the water bottle connector or installed in the water bottle connector supporting portion and second connection parts installed on the apparatus housing facing to the first connection parts, wherein the moving in the vertical direction is generated compulsorily in the track of the slide motion of the first connection parts or the slide motion of the second connection parts by the unit slide mechanism, and the relative moving of the water bottle and the water bottle connector is generated corresponding to the sliding motion by the unit slide mechanism.

In the above configuration, the detaching operation of the water bottle from the water bottle connector can be accomplished either by moving the water bottle or by moving the water bottle connector because it is caused by the relative moving.

In the latter case, if moving the water bottle connector, the first connection part of the configuration of the attaching and detaching slide mechanism is a protrusion part, the second connection parts is a slit guide, wherein the moving in the vertical direction is generated on the water bottle connector compulsory in the track of the slide motion by forming the slit guide with a certain skew. In the above configuration, the water bottle connector supporting portion supports the water bottle connector allowing movement in the vertical direction but limiting movement in the horizontal direction and supports the protrusion part connected to the slit guide allowing moving in the vertical direction.

In the former case, if moving the water bottle, the second connection parts of the attaching and detaching slide mechanism is a protrusion part, and the first connection parts is a slit guide, wherein the movement in the vertical direction is generated for the water bottle compulsorily in the track of the slide motion by forming the slit guide with a certain skew.

Next, in the configuration of the water server with the water bottle drawing operation and the water bottle push back operation as the rotating motion type, the water bottle connector attaching and detaching mechanism comprises; a unit rotating mechanism for rotating a unit including the water bottle supporting portion and the water bottle connector supporting portion around the axis of rotation; and an attaching and detaching slide mechanism for rotating the water bottle and the water bottle connector and relatively moving both while facing each other, wherein the rotating motion by the unit rotating mechanism and the attaching and detaching motion of the water bottle and the water bottle connector by the attaching and detaching slide mechanism are correlated with each other, and the water bottle can be attached to and detached from the water bottle connector by the water bottle rotating operation by pulling in the front direction and pushing in the back direction.

It is preferable that the water bottle connector attaching and detaching mechanism further comprises a non-rotating diagonal shift mechanism for moving either the water bottle supporting portion or the water bottle connector supporting portion rotated by the unit rotating mechanism along the outer track outward from the rotation track of the unit rotating mechanism, wherein the unit rotating mechanism and the attaching and detaching slide mechanism are connected via the non-rotating diagonal shift mechanism.

According to the above-mentioned configuration, in the rotating motion for pulling and skewing the water bottle in the bottle exchanging operation, the approaching motion and the separating motion are generated between the water bottle connector and the water bottle connector supporting portion by the attaching and detaching slide mechanism which generates the difference between the water bottle connector and the water bottle connector supporting portion, the one is a rotating motion rotated along with the unit rotating mechanism, the other is a non-rotating diagonal shifting motion along with the non-rotating diagonal shift mechanism.

According to the above-mentioned configuration, when the unit rotating mechanism is in the start position, the water bottle assumes the inverted state, the distance between the water bottle supporting portion and the water connector supporting portion becomes the smallest, and the status of the water bottle and the water connector becomes the connected state; when the unit rotating mechanism rotates as far as the terminus of the rotary motion, the water bottle is pulled and skewed forward, the distance between the water bottle supporting portion and the water connector supporting portion becomes large, and the status of the water bottle and the water connector assumes the disconnected state.

In this configuration, the rotating motion for pulling and skewing the water bottle cooperates with the motion for approaching and receding the water bottle supporting portion to the water bottle connector supporting portion relatively, the water bottle connector supporting portion can be attached to and detached from the opening of the water bottle easily.

According to the above-mentioned configuration, when the unit rotating mechanism is in the start position, the water bottle assumes the inverted state, the distance between the water bottle supporting portion and the water connector supporting portion becomes the normal distance for connecting the opening and water bottle connector appropriately, when the unit rotating mechanism rotates as far as the terminus of the rotary motion, the water bottle is pulled and skewed forward, and the attaching operation of the water bottle connector to the water bottle opening cooperates with the rotating motion of the water bottle connector supporting portion according to the unit rotating mechanism and the motion of the water bottle supporting portion according to the non-rotating diagonal shift mechanism.

According to the above-mentioned configuration, when the unit rotating mechanism rotates as far as the terminus of the rotary motion, the water bottle is pulled and skewed forward, the distance between the water bottle supporting portion and the water connector supporting portion becomes large, and the status of the water bottle and the water connector assumes in the disconnected state, and the detaching operation of the water bottle connector from the water bottle opening cooperates with the rotating motion of the water bottle connector supporting portion according to the unit rotating mechanism and the motion of the water bottle supporting portion according to the non-rotating diagonal shift mechanism.

It is preferable that the non-rotating diagonal shift mechanism comprises a guide slot, a sliding protrusion part for sliding in the guide slot, and a connector for connecting the sliding protrusion part and the water bottle supporting portion, wherein the position of the axis of rotation and the track of the guide slot are adjusted as the distance between the axis of rotation and the guide slot becomes smallest when the protrusion part is at the beginning of the guide slot, and the distance between the axis of rotation and the guide slot becomes large when the protrusion part slides as far as the terminus of the guide slot.

In the above-mentioned configuration, in the mechanism for exchanging the water bottle, the approaching speed and the receding speed between the opening of the water bottle and the water bottle connector supported by the water connector supporting portion in the rotating motion can be adjusted by adjusting the track of the sliding guide or the install angle of the sliding guide.

Regarding the center of the gravity of the water bottle, the position of the center of gravity of the water bottle is adjusted so as not to shift too much forward. It is preferable that the axis of rotation is located in the decentered position relative to the terminus side of the rotating motion by the unit rotating mechanism, not located in the position where the opening of the water bottle is fixed.

In addition, in the mechanism for exchanging the water bottle, it is preferable that the housing door of the water server is installed in the front, the start position of the rotating motion of the unit rotating mechanism is located in the inner side of the back in the housing, and the terminal position of the rotating motion of the unit rotating mechanism is located in the inner side of the front in the housing.

Next, for either the slide motion type or the rotating motion type, the water bottle is connected to the water bottle supporting portion firmly in order to pull out the water bottle connector from the water bottle. Therefore, the opening of the water bottle comprises a flange, the water bottle supporting portion comprises a flange grip portion for gripping the flange of the opening of the water bottle; and the move in vertical direction of the water bottle is blocked by fitting and connecting the flange of the opening of the water bottle and the flange grip portion of the water bottle supporting portion.

It is preferable that the flange grip portion has facing grips whose distance is larger than the outer diameter of the opening of the water bottle and smaller than the flange, the facing grips can accept water bottle from the same direction as the start position to the terminal position of the rotating motion of the unit rotating mechanism.

According to the above-mentioned configuration, the flange can move horizontally because the flange can move horizontal direction in the flange grip portion, but the flange cannot move vertical direction because the flange is gripped and blocked in the vertical direction in the flange grip portion.

It is preferable that those mechanisms for exchanging the water bottle are installed in the water server of the present invention as follows.

The water bottle supporting portion and the water bottle connector supporting portion are arrayed in the lower position of the water server housing, and the water bottle is installed in the lower position of the water server housing.

The water bottle can be detached from the water bottle connector by the step for opening the housing door of the water server and the step for drawing the water bottle in the front direction and the water bottle becomes in the exchangeable status; the used water bottle is exchanged with the new water bottle; and the new water bottle can be attached to the water bottle connector by the step for pushing back the water bottle in the back direction and the water bottle becomes in the fixed status.

If the water server is the slide motion type, the water bottle in the fixed state in the water server housing is such that the water bottle is installed on the water bottle supporting portion in the inverted state and is fixed by attaching the opening of the water bottle to the water bottle connector, and the water bottle in the exchangeable status is such that the water bottle is drawn in the front direction and skewed in the front direction to be exchanged easily.

If the water server is the rotating motion type, the water bottle in the fixed status in the water server housing is such that the water bottle is installed on the water bottle supporting portion in the inverted status and is fixed by attaching the opening of the water bottle to the water bottle connector, and the water bottle in the exchangeable status is such that the water bottle is drawn in the front direction with the water bottle supporting portion and the water bottle is skewed in the front direction to be exchanged easily.

### Effect of the present invention

The water server of the present invention can achieve the benefit of omitting the water bottle lift up work and lift down work by arraying the water bottle in the lower position in the housing, and the benefit of securing the hygiene by connecting the water bottle in the inverted state to the water bottle connector directly. In addition, the efficiency of the water bottle exchange operation becomes high because the water bottle can be exchanged easily by the mechanism for exchanging the water bottle.

### Brief description of the drawings

Fig.1 is a schematic view of the water server 100 in embodiment 1 mainly showing the configuration regarding exchanging the water bottle.
Fig.2 is an exploded view showing the water bottle 10.
Fig.3 is an example configuration of the connector 112.
Fig.4 is an exploded view showing the configuration of the water bottle connector 120 and the attaching and detaching slide mechanism 132.
Fig.5 is a schematic view showing the relative shift of the water connector 120 along the attaching and detaching slide mechanism 132 by the water bottle connector attaching and detaching mechanism.
Fig.6 is a schematic view showing the motion of detaching the water bottle connector 120 from the opening 11 of the water bottle 10 when the water bottle 10 is drawn in the front direction.
Fig.7 is a schematic view showing the procedure of detaching the used water bottle 10 from the water bottle supporting portion 110.
Fig.8 is a schematic view showing the procedure of pushing back the new water bottle 10 in the housing 190 and the connecting procedure of the water bottle connector 120 to the opening 11 of the exchanged water bottle 10.
Fig.9 is a flow-chart showing the procedure for exchanging the water bottle 10 in the water server 100 of the slide motion type.
Fig.10 is a schematic view of the water server 100a in embodiment 2 mainly showing the configuration regarding exchanging the water bottle.
Fig.11 is an example configuration of the connector 112a.
Fig.12 is an exploded view showing the configuration of the water bottle connector 120a.
Fig.13 is a schematic view showing the position of the axis of rotation in the water connector supporting portion 130a.
Fig.14 is a schematic view showing the relative motion between the water bottle supporting portion 110 and the water bottle connector supporting portion 130a by the attaching and detaching slide mechanism 170.
Fig.15 is a schematic view of the non-rotating diagonal shift mechanism 180.
Fig.16 is a schematic view showing the cooperation motion of the unit rotating mechanism 160, the attaching and detaching slide mechanism 170 and the non-rotating diagonal shift mechanism 180 as the second water bottle connector attaching and detaching mechanism.
Fig.17 is a schematic view showing the installed water bottle 10 in the basic state.
Fig.18 is a schematic view showing the procedure for pulling and skewing the water bottle 10 in the front direction.
Fig.19 is a schematic view showing the procedure for detaching the used water bottle 10 from the water bottle supporting portion 110a.
Fig.20 is a schematic view showing the procedure for exchanging and attaching the new water bottle 10 to the water bottle supporting portion 110a.
Fig.21 is a schematic view showing the procedure for pushing back the new water bottle 10 into the housing as the new water bottle 10 is attached to the water bottle supporting portion 110a.
Fig.22 is a flow-chart showing the procedure for exchanging the water bottle 10 in the water server 100a of the rotating motion type.

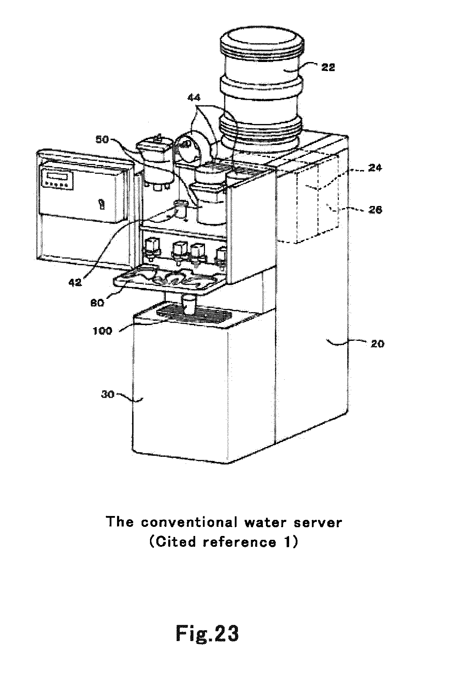

Fig.23 is a schematic view showing the configuration of the conventional water server shown in the JP 2010-63799 in the prior art.

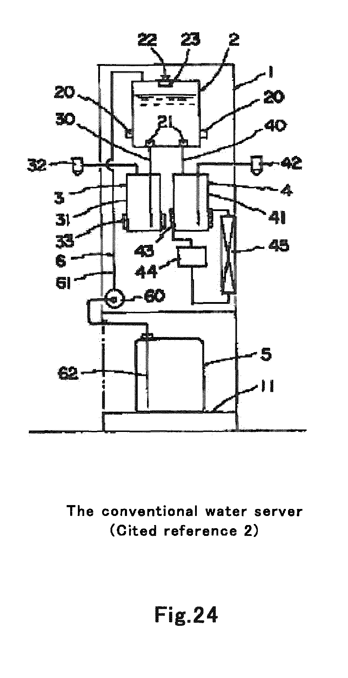

Fig.24 is a schematic view showing the configuration of the conventional water server shown in the JP 2001-153523 in the prior art.

### Detailed description of the preferred embodiment

Some embodiments of a water server according to the present invention are described below with reference to the relevant drawing. Needless to add, the claims of the present invention include but are not limited to the application, configuration, or quantity shown in the following embodiments.

A water server described hereinafter can serve both cool water and hot water selectively.

### (Embodiment 1)

A schematic view of the water server 100 is shown as an example of this embodiment 1. The water bottle is installed in the lower position of the housing of the water server 100, and the mechanism for exchanging the water bottle is positioned in the lower position of the housing of the water server 100.

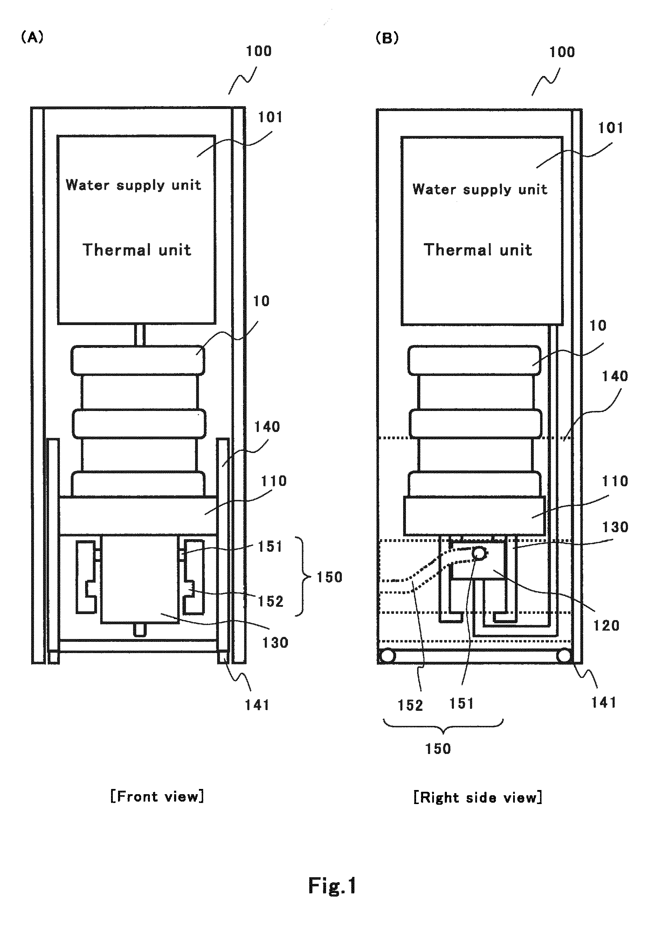

Fig.1 is a schematic view of the water server 100 in embodiment 1 mainly showing the configuration regarding exchanging the water bottle. Fig.1 (A) is a front view of the water server 100, Fig.1 (B) is a right side view of the water server 100. Fig.1 (A) shows the inside configuration of the apparatus simply without showing the part of the housing 190 such as the front door in order to understand the inside configuration of the apparatus easily. Fig.1 (B) shows the attaching and detaching slide mechanism 150 installed in the inside surface of the housing drawn by the dot line without showing the part of the housing, in addition, Fig.1 (B) shows some components with solid lines in order to understand the inside configuration of the apparatus easily.

The water server 100 of the present embodiment comprises a water bottle supporting portion 110, a water bottle connector 120, a water bottle connector supporting portion 130, a unit slide mechanism 140, and an attaching and detaching slide mechanism 150 as the configuration concerning the water bottle exchange operation. As described later, the water bottle connector attaching and detaching mechanism of this first embodiment is composed 2 components, the one is the unit slide mechanism 140 and the other is the attaching and detaching slide mechanism 150.

Regarding the housing 190, it is described simply in drawings. The water bottle is shown as the water bottle 10 in the drawings. The water server 100 includes several other components such as a water supply unit / thermal unit 101 and a water supplying unit 102, however, such components are shown simply or are not shown in the figures. The configurations concerning the water bottle exchanging mechanism are shown mainly.

First of all, the water bottle 10 is described.

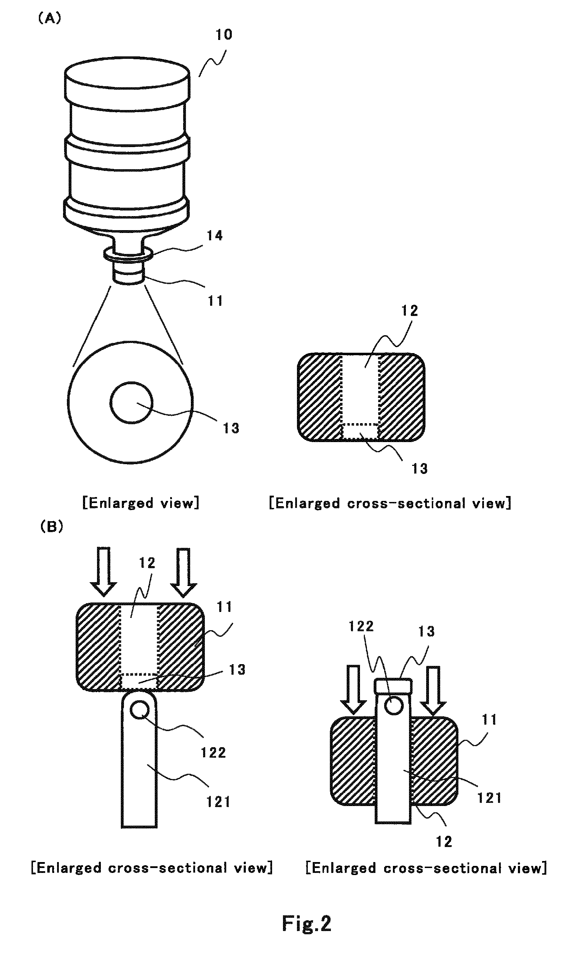

Fig.2 shows the water bottle 10. The water bottle 10 is a large bottle containing drinkable water. For example, it is made of plastic material. The water bottle comprises an opening 11 and a small hole 12 whose inside diameter is fit for the outer diameter of the connector pipe 121 of the water bottle connector 120 as described later. The opening of the small hole 12 is covered by the stopper lid cover 13.

Fig.2 (B) shows the method for connecting the water bottle connector 120 to the water bottle 10. When connecting the water bottle connector 120 to the water bottle 10, the water bottle 10 approaches to the water bottle connector 120 from an upper position, and the facing connector pipe 121 is inserted to the small hole 12 of the opening 11. As shown in the left side figure of Fig.2 (B), the front edge of the stick-shape connector pipe 121 contacts the stopper lid 13, the water bottle 10 keeps on going down, then the connector pipe 121 pushes up the stopper lid 13, finally the top edge of the connector pipe 121 reaches inside of the water bottle 10, and then the water bottle 10 and the water bottle connector are connected. The stick-shape connector pipe 121 provides the water supply route. There is a small hole 122 near the top edge. The water bottle 10 and the connector pipe 121 are connected via the small hole 122, so the water contained in the water bottle 10 can be provided by the water bottle connector 120.

If the water bottle 10 is pulled up, the small hole 12 of the opening 11 is detached from the connector pipe 121 of the water bottle connector 120. As shown in Fig.2 (A), the water bottle 10 comprises a flange 14 on the outer wall of the opening 11. The flange 14 can fit and engage with the connector 112 of the water bottle supporting portion 110. The connection of the flange 14 and the connector 112 is described later. The configuration of the water bottle 10 is only one example, and other configurations are possible.

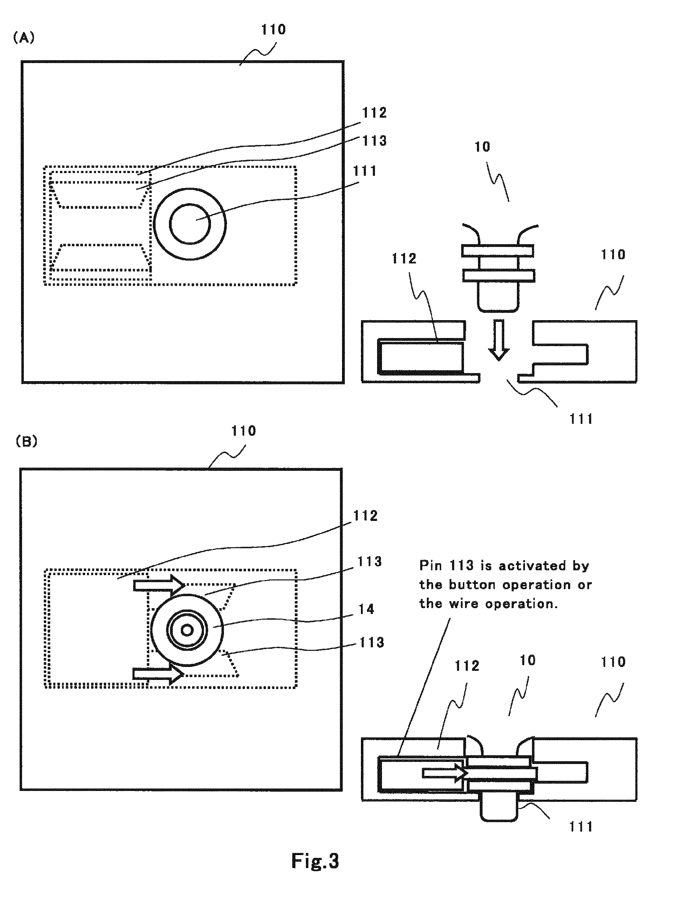

Next, the water bottle supporting portion 110 is described. The water bottle supporting portion 110 supports the water bottle 10. The water bottle supporting portion 110 is a plate shape in this example. The water bottle supporting portion 110 of the example shown in Fig.3 (A) comprises the hole of the water bottle acceptor 111. The water bottle acceptor 111 accepts the opening 11 of the water bottle 10. The water bottle 10 is supported by the water bottle supporting portion 110 in the inverted state by inserting the top opening 11 to the water bottle acceptor 111. In this example, the hole of the water bottle acceptor 111 is circle whose diameter is fit for the outer diameter of the top opening 11 of the water bottle 10.

The water bottle supporting portion 110 comprises the connector 112 which includes a pin 113. The pin 113 can be pushed and pulled by the wire or the actuator (not shown) by the button push or the wire operation as shown in figure 3(B), the pin 113 catches and fixes the flange 14 of the water bottle 10. As shown above, the water bottle 10 is connected with the water bottle supporting portion 110 firmly by being fixed by the connector 112. The water bottle 10 is not simply put onto the connector 112.

The example shown in Fig.3, there are 2 pins in the connector 112. The gap between the pins is larger than the diameter of the top opening 11 of the water bottle 10 and is smaller than that of the flange 14. As shown in Fig.3 (B), the top opening 11 of the water bottle 10 is pinched by the 2 pins, the vertical motion of the water bottle 10 is blocked by the pin 113 of the connector 112. The vertical direction corresponds to the normal to the paper showing Fig.3, the vertical motion is restrained by the connecting of the flange 14 and the pin 113 of the connector 112 of the water bottle supporting portion 110. The water bottle 10 and the water bottle supporting portion 110 are connected firmly in the vertical direction.

The connection of the water bottle 10 and the water bottle supporting portion 110 provides the following effect. As shown in Fig.2 (B), the connector pipe 121 of the water bottle connector 120 inserted to the small hole 12 of the water bottle 10 is connected with large friction. Therefore, the large friction force will be generated when pulling the water bottle 10 from the water bottle connector 120. As described later, the attaching and detaching slide mechanism 150 can attach and detach the water bottle 10 fixed by the water bottle supporting portion 110 to and from the water bottle connector 120 supported by the water bottle connector supporting portion 130, in the attaching and detaching motion. The connector 112 of the water bottle supporting portion 110 can restrain the relative vertical shift of the water bottle 10 to the water bottle supporting portion 110. The water bottle 10 and the water bottle supporting portion 110 move together. The pin 113 of the connector 112 and the flange 14 are fixed together, the water bottle 10 and the water bottle supporting portion 110 connected firmly, and the connecting state can overcome the friction force between the water bottle 10 and the water bottle connector 120 generated when pulling the water bottle 10 from the water bottle connector 120.

Next, the water bottle connector 120 is described. The water bottle connector 120 is an instrument for taking water from the water bottle 10 through the connector pipe 121 via the opening 11.

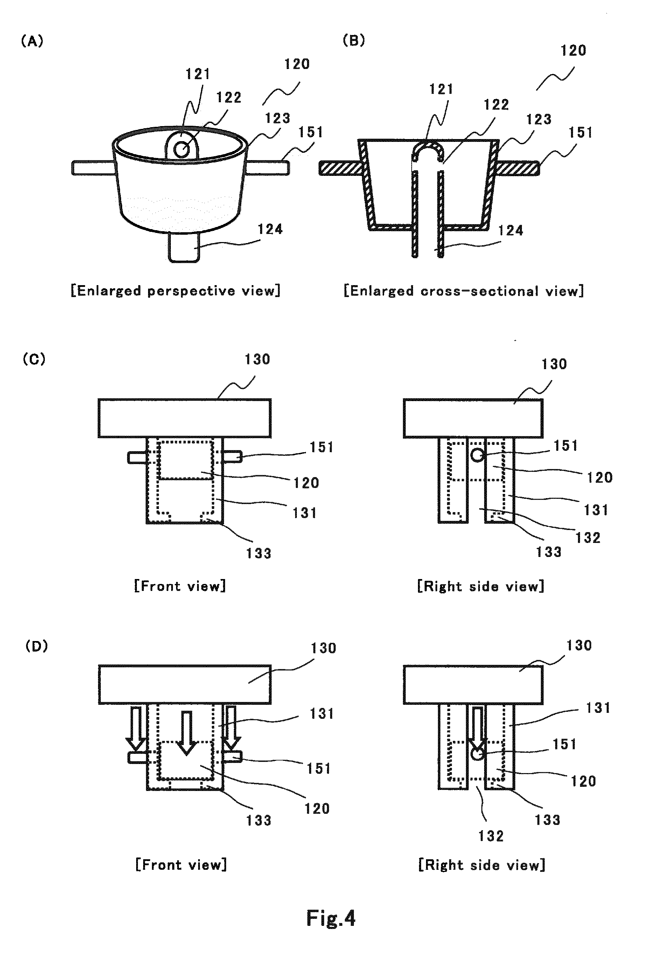

Fig.4 (A) and Fig.4 (B) are showing the configuration of the water bottle connector 120. Fig.4 (A) is a perspective view, Fig.4 (B) is a cross sectional view. In this configuration, the connector pipe 121 is installed in the center portion, surrounded by the small cup 123. As shown in Fig.2 (B), the water bottle 10 and the water bottle connector 120 are connected by inserting the connector pipe 121 to the opening 11 of the water bottle 10. There is a small hole 122 on the side of the connector pipe 121, and the inner space of the water bottle connector 120 and the inner space of the water bottle 10 are connected via this small hole 122 when the connector pipe 121 reaches inner space of the water bottle 10 through the opening 11. The water bottle connector 120 comprises a tube 124. The tube 124 provides the water route from the water bottle 10 to the water system installed in the water server.

In this example, the water bottle connector 120 includes the protrusion part 151. The protrusion part 151 is the first connection part of the attaching and detaching slide mechanism 150. The protrusion part 151 is combined with the guide 152 installed in the housing 190 as the second connection parts of the attaching and detaching slide mechanism 150.

Next, the water bottle connector supporting portion 130 is described. Fig.4 (C) shows the configuration of the water bottle connector supporting portion 130 simply, and some inner components are drawn by the dotted line for ease of understanding.

The water bottle connector supporting portion 130 is a portion for supporting the water bottle connector 120. In the configuration shown in Fig.4 (C), the water bottle connector supporting portion 130 includes an upper plate and a cylinder shape cup 131 under the upper plate. The cylinder shape cup 131 provides the space for the water bottle connector 120 to move vertical direction. The water bottle connector 120 can move freely in the vertical direction along to the inner space of the cylinder shape cup 131 but cannot move in the horizontal direction restrained by the inner wall of the cylinder shape cup 131. As shown in Fig.4 (C), the water bottle connector supporting portion 130 includes slit 132 on the side of the cylinder shape cup 131. This slit 132 provides a space for the protrusion part 151 to move in vertical direction.

As shown in Fig.4 (D), the protrusion part 151 fits to the facing guide 152 installed in the housing 190, and the protrusion part 151 can move in the vertical direction relative to the cylinder shape cup 131.

The water bottle connector supporting portion 130 includes the stopper 133 in the bottom of the cylinder shape cup 131 for stopping the water bottle connector 120 from dropping from the cylinder shape cup 131.

Next, the first water bottle connector attaching and detaching mechanism is described.

The first water bottle connector attaching and detaching mechanism is a mechanism for controlling the distance between the opening 11 of the water bottle 10 supported by the water bottle supporting portion 110 and the water bottle connector 120 supported by the water bottle connector supporting portion 130 and controlling the attaching and detaching these two parts. In this configuration, the first water bottle connector attaching and detaching mechanism comprises the unit slide mechanism 140 and the attaching and detaching slide mechanism 150. The unit slide mechanism 140 and the attaching and detaching slide mechanism 150 are described.

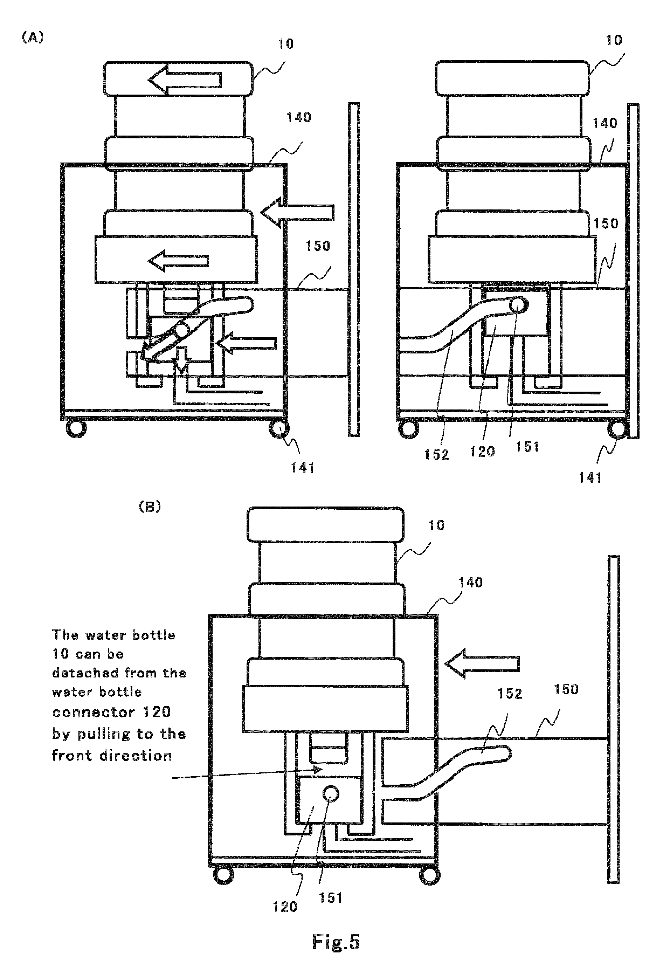

The unit slide mechanism 140 is a mechanism for sliding the unit including the water bottle supporting portion 110 and the water bottle connecting portion 130 backward and forward. In the configuration shown in Fig.5, the unit slide mechanism 140 is shown simply. The housing 190 is shown only in its outline, and the water bottle supporting portion 110 and the water bottle connecting portion 130 are shown mainly. The unit slide mechanism 140 comprises caster 141 on the bottom for sliding the unit slide mechanism 140 backward and forward.

The unit slide mechanism 140 works together with the attaching and detaching slide mechanism 150, the attaching and detaching the water bottle connector 120 to the opening 11 of the water bottle 10 by the attaching and detaching slide mechanism 150 is achieved according to the slide motion of the water bottle 10 by the unit slide mechanism 140.

The attaching and detaching slide mechanism 150 is a mechanism for moving the water bottle 10 and the water bottle connector 120 relatively while facing each other. In this example, the attaching and detaching slide mechanism 150 comprises the protrusion part 151 as a first connection part and the guide 152 installed in the housing as the second connection part. The protrusion part 151 slides along the guide 152.

As shown in Fig.1 and Fig.5, the vertical motion element can be generated compulsorily because the guide 152 installed on the housing 190 includes an oblique portion. Because of this oblique portion in the guide 152, the moving track of the protrusion part 151 includes a vertical motion element, so the relative motion between the water bottle 10 and the water bottle connector 120 is generated compulsorily when the protrusion part 151 moves along to the guide 152 by the unit slide mechanism 140.

The left figure of Fig.5 (A) shows the basic state. The right figure of Fig.5 (A) shows the appearance when sliding the unit including the water bottle supporting portion 110 and the water bottle connecting portion 130 by the unit slide mechanism 140. The water bottle connecting portion 130 slides forward, and the protrusion part 151 of the water bottle connector 120 slides along to the guide 152 installed on the inner surface of the housing 190. The moving track of the water bottle connector 120 includes vertical motion element compulsory because the guide 152 includes oblique portion for vertical motion element. Therefore, the water bottle connector 120 goes down in the inner space of the cylinder shape cup 131.

In this example, the water bottle connector 120 moves relative to the water bottle 10 correctly facing the water bottle 10, and the connector pipe 121 of the water bottle connector 120 is adjusted for detaching from the opening 11 of the water bottle 10 when the water bottle connector 120 goes down in the inner space of the cylinder shape cup 131. Therefore, the connector pipe 121 of the water bottle connector 120 is detached from the opening 11 of the water bottle 10 during the protrusion part 151 moving along to the guide 152 as shown in Fig.5 (B).

In this manner, the attaching and the detaching of the water bottle 10 and the water bottle connector 120 by the attaching and detaching slide mechanism 150 is generated automatically corresponding to the slide motion by the unit slide mechanism 140. When the user slide the water bottle 10 forward for exchanging the used water bottle to the new water bottle, the detaching of the water bottle connector 120 from the opening of the water bottle 10 automatically.

Next, the operation for exchanging the water bottle 10 of the water server 100 of the present invention is described below.

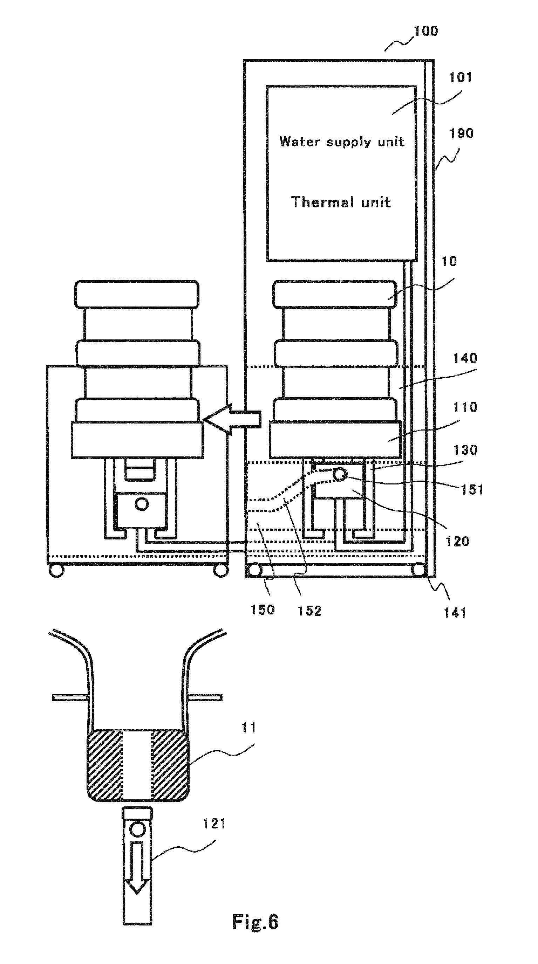

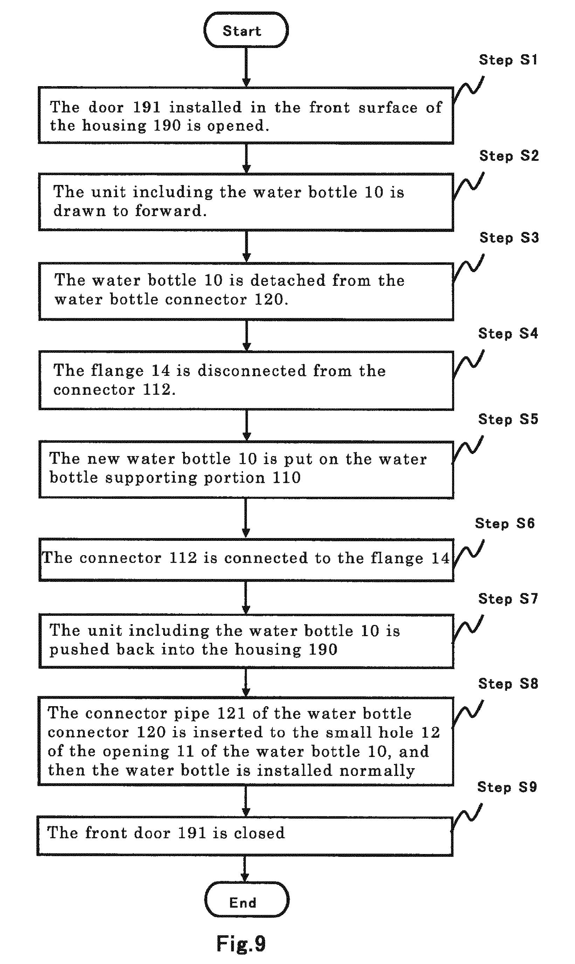

Fig.6 to Fig.8 are schematic views showing the exchange operation of the water bottle 10 simply. Fig.9 is a flow-chart showing the procedure for exchanging the water bottle 10 in the water server 100 of this embodiment 1.

As the first step of the exchanging operation, the door installed in the front surface of the housing 190 is opened (Fig.9 step S1) (not shown in Fig.6 to Fig.8). For example, the water bottle 10 is installed in the front lower position around the knee of the user in the inverted state.

The right figure of Fig.6 shows the basic state. The used water bottle 10 is installed in the water server 100 in the inverted state. The opening 11 is accepted to the water bottle acceptor 111 of the water bottle supporting portion 110, and the water bottle 10 is supported on the water bottle supporting portion 110 in the inverted state. The flange 14 of the water bottle 10 is fitted to the connector 112 of the water bottle supporting portion 110.

In the basic state shown in the right figure of Fig.6, the distance between the water bottle supporting portion 110 and the water bottle connecting portion 130 becomes smallest, and the water bottle 10 is attached to the water bottle connector 120 correctly. The weight of the water bottle 10 filled with water is heavy, and the water bottle 10 assumes a stable state upon attaching to the water bottle connector 120 correctly.

Next, as shown from the right figure to the left figure of Fig.6, the user slides the unit including the water bottle 10, water bottle supporting portion 110 and the water bottle connecting portion 130 forward. The user can slide unit smoothly by the unit slide mechanism 140 (Fig.9 step S2).

The right figure to the left figure of Fig.6 show the detaching operation of the water bottle 10 from the water bottle connector 120. If the water bottle 10 is drawn forward, the attaching and detaching slide mechanism 150 makes the protrusion part 151 move along the guide 152, so the distance between the water bottle supporting portion 110 and the water bottle connecting portion 130 becomes large, then the water bottle connector 120 goes down from the opening 11 of the water bottle 10, and finally the connector pipe 121 of the water bottle connector 120 is detached from the opening 11 of the water bottle 10 normally.

The water bottle 10 is fixed firmly to the water bottle supporting portion 110 because the flange 14 of the water bottle 10 is combined with the connector 112 of the water bottle supporting portion 110. The connector pipe 121 of the water bottle connector 120 is detached from the opening 11 of the water bottle 10 because the distance between the water bottle 10 and the water bottle connector 120 becomes large corresponding to the enlargement of the distance between the water bottle supporting portion 110 and the water bottle connecting portion 130. As a result, the water bottle 10 is detached from the water bottle connector 120 (Fig.9 step S3).

As shown the left figure of Fig.6, if the drawing of the water bottle 10 is accomplished, the water bottle 10 is detached from the water bottle connector 120 automatically. The water bottle 10 is ready to be taken off for exchanging.

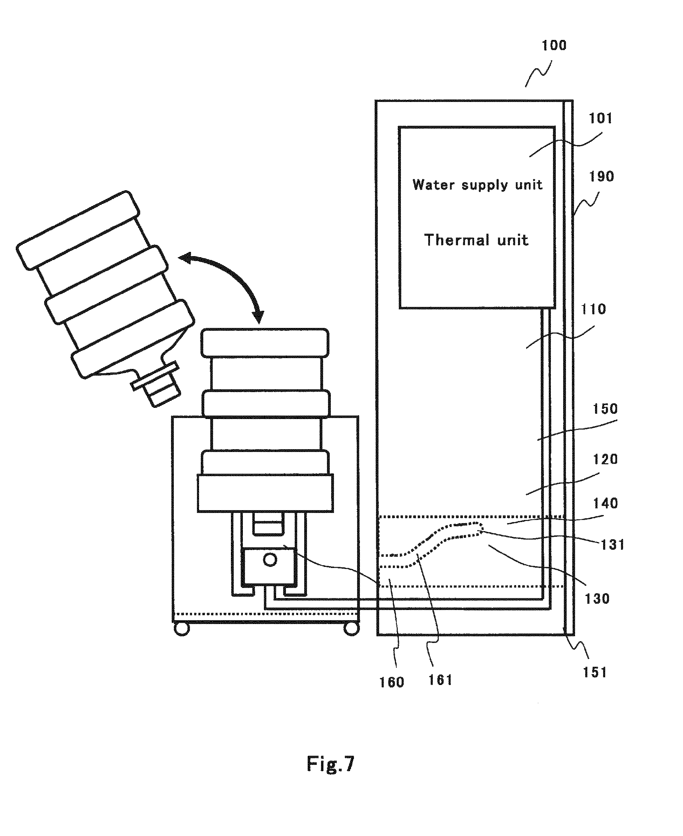

Fig.7 is a schematic view showing the procedure of detaching the used water bottle 10 from the water bottle supporting portion 110 and the exchanging procedure of the used water bottle to the new water bottle.

The unit including the water bottle supporting portion 110 and the water bottle connecting portion 130 is pulled and drawn forward, and the used water bottle 10 is easy to pick up.

As shown in Fig.7, the used water bottle 10 should be disconnected from the connector 112 for picking up the used water bottle 10 from the water bottle supporting portion 110. The flange 14 of the water bottle 10 connected to the connector 112 can be disconnected by the button push or the wire operation (not shown), and the used water bottle 10 can be picked up after disconnecting the flange 14 from the connector 112 (Fig.9 step S4).

Next, the used water bottle 10 is exchanged with the new water bottle 10 filled with drinkable water and put on the water bottle supporting portion 110 (Fig.9 step S5). The user just picks up the used water bottle and just puts on the new water bottle simply. The user is not requested to disconnect or connect the water bottle 10 and the water bottle connector 120. After exchanging the water bottle, the connector 112 is connected to the flange 14 (Fig.9 step S6).

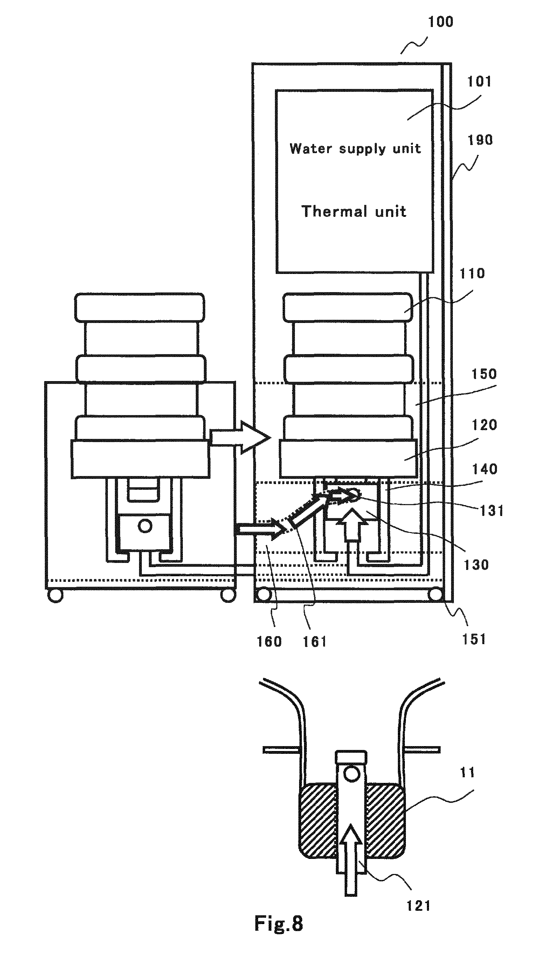

Next, Fig.8 is a schematic view showing the pushing back procedure of the new water bottle 10 in the housing 190 and the connecting procedure of the water bottle connector 120 to the opening 11 of the exchanged water bottle 10. This procedure shown in Fig.8 is the reverse procedure shown in Fig.6.

As shown in the left figure of Fig.8 to the right figure of Fig.8, the user push buck the unit including the water bottle 10 into the housing 190 (Fig.9 step S7), the protrusion part 151 slides along to the guide 152, and the water bottle connector 120 goes up to the water bottle 10. The distance between the water bottle supporting portion 110 and the water bottle connecting portion 130 becomes small, the connector pipe 121 of the water bottle connector 120 is inserted to the small hole 12 of the opening 11 of the water bottle 10, and then the water bottle is installed normally (Fig.9 step S8).

After finishing the water bottle exchanging procedure, the front door is closed (Fig.9 step S9).

The procedure shown above is the operation of the water bottle exchanging mechanism. In short, the water bottle connector 120 can be connected and disconnected to the opening 11 of the water bottle 10 automatically corresponding to the unit slide motion sliding the unit including the water bottle supporting portion 110 and the water bottle connecting portion 130.

As shown above, the water bottle connector 120 can be connected and disconnected to the opening 11 of the water bottle 10 automatically corresponding to the distance between the water bottle supporting portion 110 and the water bottle connecting portion 130 controlled by the working of the unit slide mechanism 140 and by the working of the attaching and detaching slide mechanism 150.

### (Embodiment 2)

The water server 100a is described below.

In this embodiment 2, the water bottle exchanging mechanism is installed in the lower portion in the housing of the water server 100a, and the water bottle 10 is installed in the lower position in the housing of the water server 100a. The configuration of the water server is not limited to this type.

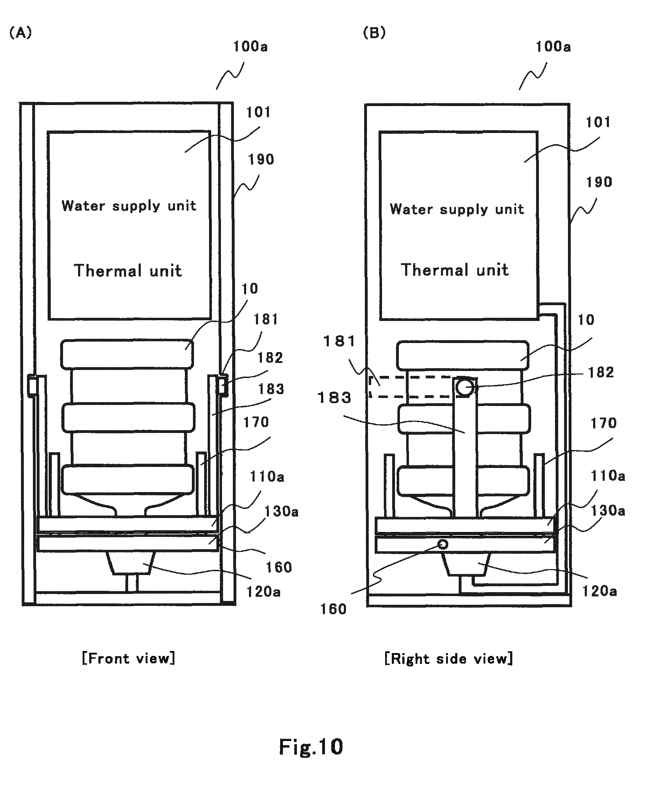

Fig.10 is a schematic view of the water server 100a in embodiment 2 mainly showing the configuration regarding exchanging the water bottle. Fig.10 (A) is the front view of the water server 100a, and Fig.10 (B) is the right side view of the water server 100a. Fig.10 (A) shows the inside configuration of the apparatus simply without showing the part of the housing 190 such as the front door for ease of understanding the inside configuration of the apparatus. Fig.10 (B) shows only the non-rotating diagonal shift mechanism installed in the side portion of the housing drawn by the dot line without showing the part of the housing for ease of understanding the inside configuration of the apparatus.

The water server 100a of this embodiment 2 comprises a water bottle supporting portion 110a, a water bottle connector 120a, a water bottle connector supporting portion 130a, a unit rotating mechanism 160, an attaching and detaching slide mechanism 170, and a non-rotating diagonal shift mechanism 180. As described later, the water bottle connector attaching and detaching mechanism of this second embodiment is configured by 3 components, a unit rotating mechanism 160, an attaching and detaching slide mechanism 170, and a non-rotating diagonal shift mechanism 180.

Regarding the housing 190, it is simplified and described in drawings. The water server 100 includes several other components such as a water supply unit / thermal unit 101 and a water supplying unit 102, however, such configurations are shown simply or are not shown in the figures. The configurations concerning the water bottle exchanging mechanism are shown and described mainly.

Each component is described below.

The water bottle 10 can be the same as shown in embodiment 1.

Next, the water bottle supporting portion 110a of this embodiment 2 is described.

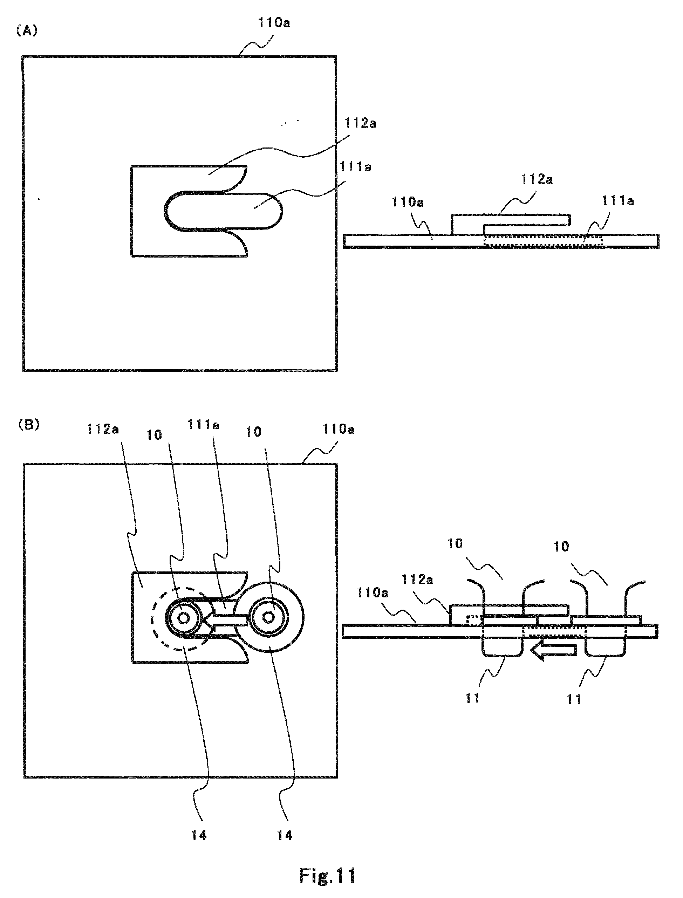

Fig.11 is an example configuration of the water bottle supporting portion 110a of this embodiment 2. The water bottle supporting portion 110 shown in embodiment 1 can be employed as the water bottle supporting portion 110a of this embodiment 2. However, the water bottle supporting portion 110a whose configuration is different from that of the water bottle supporting portion 110 is employed here.

The water bottle supporting portion 110a is a component for supporting the water bottle 10. The water bottle supporting portion 110a is a plate shape component. The water bottle supporting portion 110a includes a hole of the water bottle acceptor 111a which can accept the opening 11 of the water bottle 10. The water bottle 10 is supported by the water bottle supporting portion 110a in the inverted status by inserting the opening 11 to the water bottle acceptor 111a. In this example, the hole of the water bottle acceptor 111a is an oblong circle for providing the space for the opening11 of the water bottle 10 to slide. First the opening11 of the water bottle 10 is inserted to the water bottle acceptor 111a, and then sliding the water bottle to slide the flange 14 in the connector 112a shown in Fig.11 (B).

The water bottle supporting portion 110a comprises a connector 112a for connecting with the flange 14. The water bottle 10 is not just simply put onto the acceptor 111a of the water bottle supporting portion 110. The water bottle 10 is fixed firmly by the connector 112a.

Fig.11 (A) shows the example of the connector 112a. In this configuration, the connector 112a has a horseshoe shape flange in the front portion (the left side in figure) as shown in Fig.11 (A). The gap between the horseshoe shape hooks is larger than the diameter of the opening 11 of the water bottle 10 and is smaller than the diameter of the flange 14. As shown in Fig.11 (B), the opening 11 of the water bottle 10 can slide in and out along the horseshoe shape flange edge. Therefore, the flange 14 is allowed for the horizontal element motion. However, the flange 14 is restrained for the vertical element motion by the connector 112a of the water bottle supporting portion 110a. The connector 112a has an open horseshoe shape in the left direction in Fig.11, the opening 11 of the water bottle can slide to the horizontal direction, but the opening 11 of the water bottle cannot move to the vertical direction restrained by the blocking of the flange 14 and the connector 112a of the water bottle supporting portion 110a. The water bottle 10 and the water bottle supporting portion 110a are fixed firmly in the vertical direction.

Next, the water bottle connector 120a of this embodiment 2 is described below.

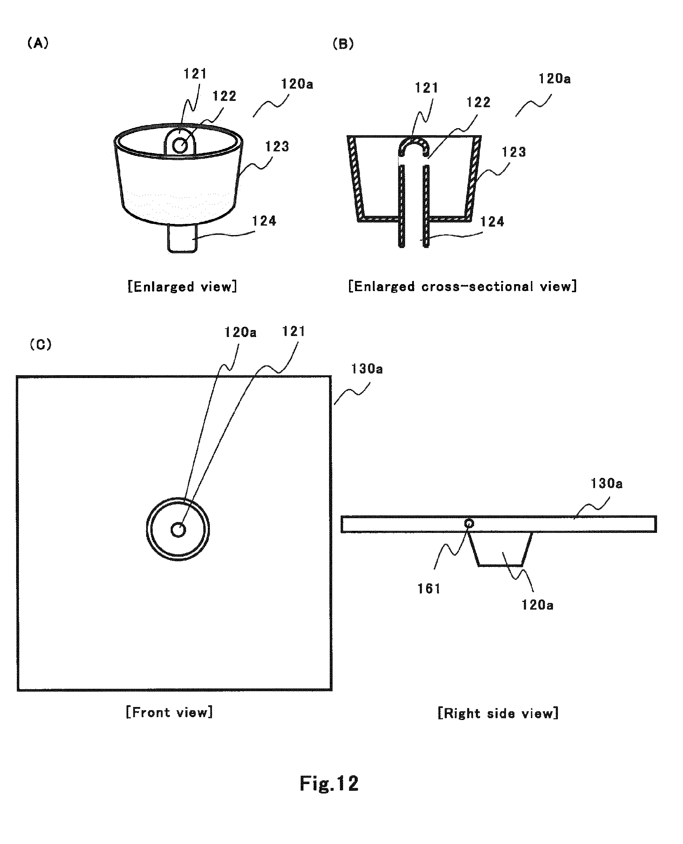

As shown in Fig.12 (A) and Fig.12 (B), the water bottle connector 120a of this embodiment 2 is the same as the water bottle connector 120 of embodiment 1. The water bottle connector 120 of embodiment 1 comprises the attaching and detaching slide mechanism 150 and the protrusion part 151, but the water bottle connector 120a of this embodiment 2 does not have such a protrusion part. Other configurations can be the same as the water bottle connector 120, and the detail explanation is omitted here.

Next, the water bottle connector supporting portion 130a is described below.

The water bottle connector supporting portion 130a is a component for a base for the water bottle connector 120a the same as water bottle connector supporting portion 130 described in Embodiment 1. Fig.12 (C) and Fig.12 (D) show the water bottle connector supporting portion 130a wherein the water bottle connector 120a is installed. As described later, the water bottle supporting portion 110a and the water bottle connector supporting portion 130a are moved relatively each other, the water bottle 10 and the water bottle connector 120a are moved relatively each other. In this configuration, the water bottle connector 120a is installed in the center portion of the water bottle connector set position.

The water bottle connector supporting portion 130a comprises a rotation axis 161 of the unit rotating mechanism 160. The water bottle connector supporting portion 130a rotates around the rotation axis 161 by the work of the unit rotating mechanism 160.

Next, the second water bottle connector attaching and detaching mechanism is described.

The same as the first water bottle connector attaching and detaching mechanism of the Embodiment 1, the second water bottle connector attaching and detaching mechanism is a mechanism for controlling the distance between the opening 11 of the water bottle 10 supported by the water bottle supporting portion 110a and the water bottle connector 120 supported by the water bottle connector supporting portion 130a. The second water bottle connector attaching and detaching mechanism controls the distance between the water bottle supporting portion 110a and the water bottle connector supporting portion 130a corresponding to the pulling action of the water bottle 10, and the attaching and detaching the water bottle 10 to the water bottle connector 120 automatically is accomplished.

In this configuration, the second water bottle connector attaching and detaching mechanism comprises 3 components. These are the unit rotating mechanism 160, the attaching and detaching slide mechanism 170, and the non-rotating diagonal shift mechanism 180.

First, the unit rotating mechanism 160 is described. The unit rotating mechanism 160 is a mechanism for rotating the water bottle connector supporting portion 130a around the rotation axis 161. In this configuration, the roller bearing is installed in the inner surface of the housing 190 (not shown), the rotation axis 161 is attached to the roller bearing. The rotation axis 161 penetrates the water bottle connector supporting portion 130a rotatable.

The position of the rotation axis 161 where the rotation axis 161 penetrates the water bottle connector supporting portion 130a can be decentered from the center portion of the water bottle connector supporting portion 130a (the position of the cylinder shape cup 131 where the water bottle 10 is connected) to the rotating terminal direction rotated by the unit rotating mechanism 160.

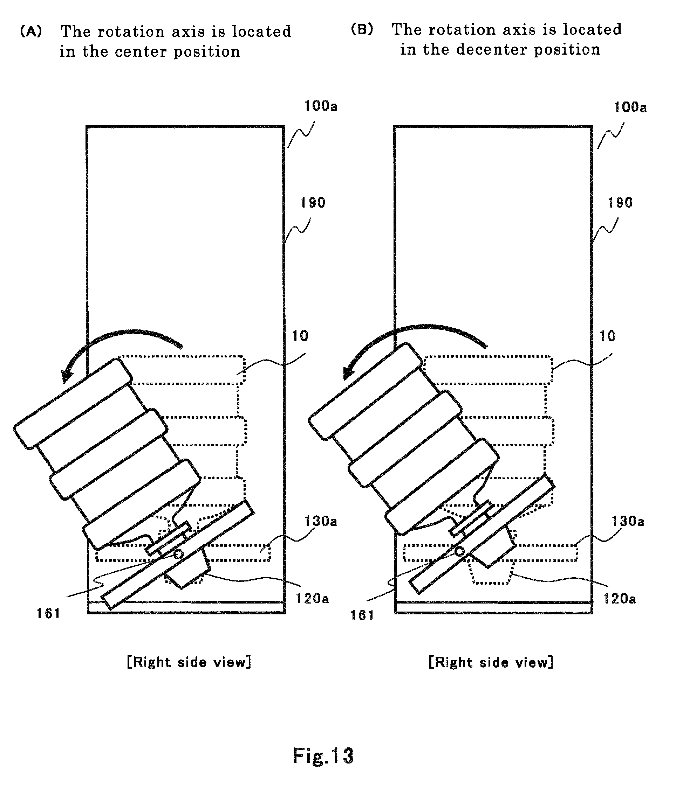

Fig.13 is a schematic view showing the position of the rotation axis 161 penetrating the water connector supporting portion 130a. Fig.13 shows only the rotation axis 161, the water connector supporting portion 130a and the water bottle connector 120 in order to understand the rotating motion easily. The motion to be added by the attaching and detaching slide mechanism 170 and the non-rotating diagonal shift mechanism 180 are not included in the motion shown in Fig.13.

Fig.13 (A) shows the general expected motion when the water bottle connector supporting portion 130a is rotated if the position of the rotation axis 161 located in the center portion of the water bottle connector supporting portion 130a. On the other hand, Fig.13 (B) shows the general expected motion when the water bottle connector supporting portion 130a is rotated if the position of the rotation axis 161 is decentered from the center portion of the water bottle connector supporting portion 130a to the rotating terminal direction (left side in the Figure).

As shown in Fig.13 (A), the position of the rotation axis 161 located in the center portion of the water bottle connector supporting portion 130a, the water bottle connector supporting portion 130a is rotating around the rotation axis 161 in the center portion, the bottom of the water bottle 10 come to front (left side in the Figure) for picking up easily, but the water bottle 10 is still in the inside of the housing. However, as shown in Fig.13 (B), the position of the rotation axis 161 is decentered from the center portion of the water bottle connector supporting portion 130a to the rotating terminal direction, the water bottle connector supporting portion 130a is rotating around the rotation axis 161 in the decentered position, and the bottom of the water bottle 10 comes to the front more (left side in the Figure) for picking up more easily. As shown Fig.13, the user can pick up the water bottle 10 more easily if the position of the rotation axis 161 is decentered from the center portion of the water bottle connector supporting portion 130a toward the rotating terminus direction.

Next, the attaching and detaching slide mechanism 170 is described below.

The attaching and detaching slide mechanism 170 is a mechanism for connecting the water bottle supporting portion 110a and the water bottle connector supporting portion 130a in facing each other and for approaching each other or receding from each other. The relative motion of the water bottle supporting portion 110a is controlled to face the water bottle connector supporting portion 130a correctly and approaching to the water bottle connector supporting portion 130a and receding from the water bottle connector supporting portion 130a via the attaching and detaching slide mechanism 170. If the water bottle connector supporting portion 130a is rotated by the unit rotating mechanism 160, the water bottle supporting portion 110a is rotated according to the rotating motion of the water bottle connector supporting portion 130a, in addition to the motion generated by the attaching and detaching slide mechanism 170 as the water bottle supporting portion 110a faces to the water bottle connector supporting portion 130a correctly and approaches to the water bottle connector supporting portion 130a and recedes from the water bottle connector supporting portion 130a.

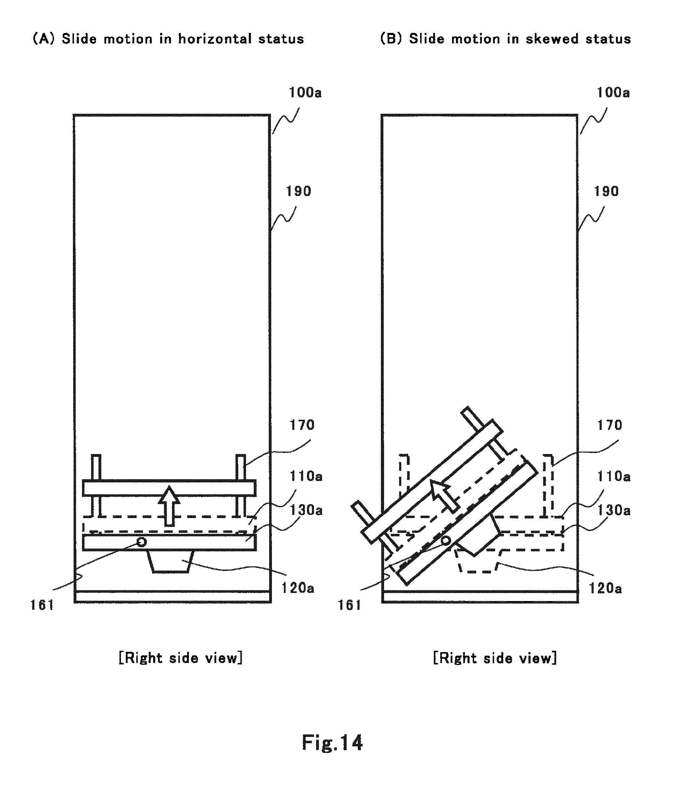

Fig.14 is a schematic view showing the relative motion between the water bottle supporting portion 110a and the water bottle connector supporting portion 130a by the attaching and detaching slide mechanism 170.

As shown in Fig.14 (A), the water bottle supporting portion 110a and the water bottle connector supporting portion 130a approach each other and recede from each other by the attaching and detaching slide mechanism 170.

As shown in Fig.14 (B), the water bottle connector supporting portion 130a is rotated by the unit rotating mechanism 160 from the status shown in Fig.14 (A) to the status shown in Fig.14 (B), the water bottle supporting portion 110a faces to the water bottle connector supporting portion 130a correctly and it can approach to the water bottle connector supporting portion 130a and recede from the water bottle connector supporting portion 130a.

Next, the non-rotating diagonal shift mechanism 180 is described below. The non-rotating diagonal shift mechanism 180 is a mechanism for shifting the water bottle supporting portion 110a connected to the water bottle connector supporting portion 130a. The non-rotating diagonal shift mechanism 180 is not limited but enough for sifting the water bottle supporting portion 110a in other track of the unit rotating mechanism.

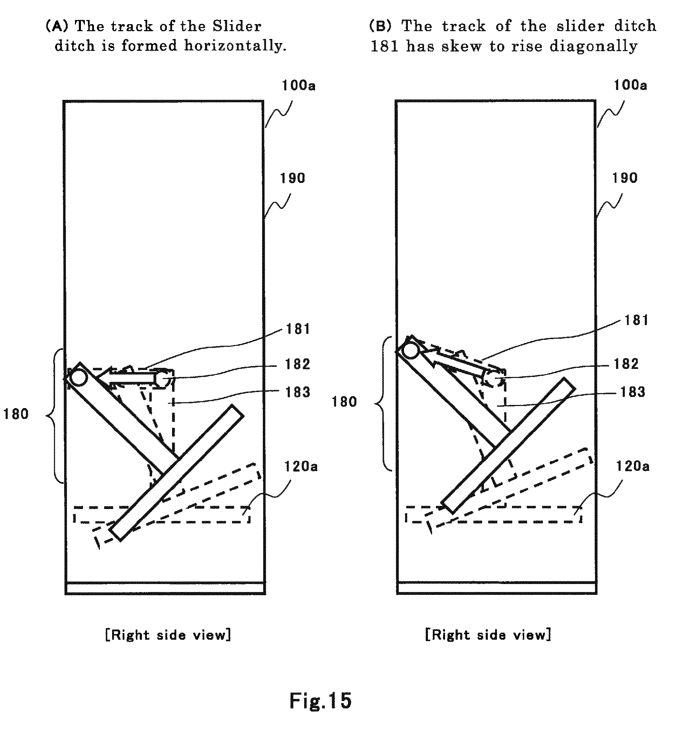

Fig.15 is a schematic view of the non-rotating diagonal shift mechanism 180. In this configuration, the non-rotating diagonal shift mechanism 180 comprises a slider guide 181, slider caster 182 and connector 183 connecting for the slider caster 182 and the water bottle supporting portion 110a.

Especially, the configuration shown in Fig.15 (A), the slider guide 181 is formed onto the inside surface of the housing 190 horizontally. One terminus of the slider guide 181 is formed in the deep inside surface of the housing 190, the other terminus of the slider guide 181 is formed in the front inside of the housing 190. The slider guide 181 is formed between these terminuses horizontally. If the slider guide 181 is formed horizontally as shown in Fig.15 (A), the slider caster 182 slides horizontally along the slider guide 181, and a part of the non-rotating diagonal shift mechanism 180 moves horizontally. The water bottle supporting portion 110a is connected to the slider caster 182 by the connector 183, and the water bottle supporting portion 110a moves corresponding to sliding motion of the slider caster 182. This motion is a different motion from the rotating motion of the unit rotating mechanism 160.

In the configuration of the non-rotating diagonal shift mechanism 180, the track of the slider guide 181 is not limited to the horizontal direction. Various tracks can be applied without obstructing the moving of the slider caster 182. In the example shown in Fig.15 (B), the track of the slider guide 181 has an oblique portion for the front direction (left in figure) of the housing 190. As shown in Fig.15 (B), the slider caster 182 moves along the slider guide 181, and it goes forward and rises upward by the non-rotating diagonal shift mechanism 180. The water bottle supporting portion 110a is connect to the slider caster 182 by the connector 183, the water bottle supporting portion 110a moves corresponding to the motion of the slider caster 182, the track of the motion of the water bottle supporting portion 110a shown in Fig.15 (B) shit upward comparing with that shown in Fig.15 (A).

The components of the water server 100a in embodiment 2 are explained as shown above, and the entire motion of the water server 100a in embodiment 2 is the combined motion of the unit rotating mechanism 160, the attaching and detaching slide mechanism 170 and the non-rotating diagonal shift mechanism 180. The entire motion of the water server 100a in embodiment 2 is shown below.

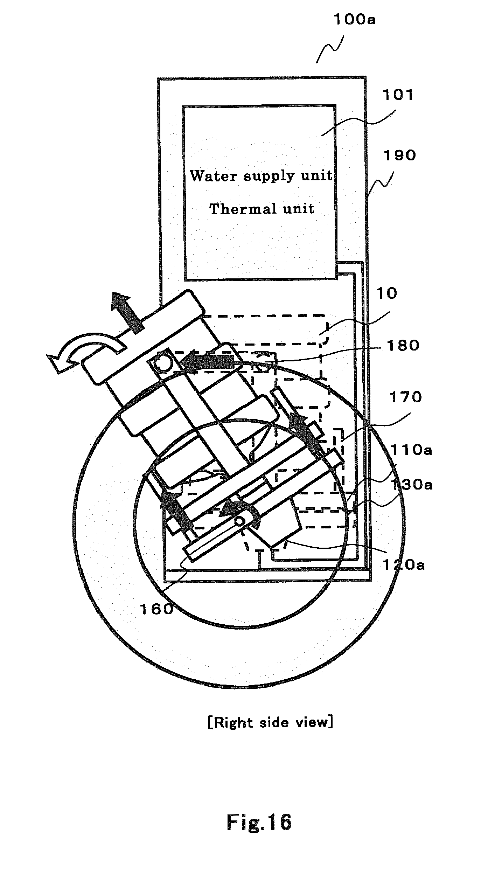

Fig.16 is a schematic view showing the cooperation motion of the unit rotating mechanism 160, the attaching and detaching slide mechanism 170 and the non-rotating diagonal shift mechanism 180 as the second water bottle connector attaching and detaching mechanism.

In the pulling action of the water bottle 10 in a water bottle exchanging operation, the water bottle 10 is installed to the water bottle connector 120a, and the water bottle connector supporting portion 130a rotates by the unit rotating mechanism 160.

The motion of the water bottle supporting portion 110a becomes the combined motion of the rotating motion by the unit rotating mechanism 160 and the parallel motion by the non-rotating diagonal shift mechanism 180.

As the motion of the water bottle supporting portion 110a is maintained facing correctly toward the water bottle connector supporting portion 130a by the attaching and detaching slide mechanism 170, so if the water bottle connector supporting portion 130a rotates by the unit rotating mechanism 160, the water bottle supporting portion 110a rotates corresponding to the water bottle connector supporting portion 130a.

On the other hand, the water bottle supporting portion 110a is connected to the non-rotating diagonal shift mechanism 180 by the connector 183, and the water bottle supporting portion 110a will move corresponding to the non-rotating diagonal shift mechanism 180. As a result, the motion corresponding to the rotating motion by the water bottle connector supporting portion 130a and the motion corresponding to the non-rotating diagonal shift mechanism 180 are combined simultaneously. In this configuration, the water bottle supporting portion 110a rotates according to the water bottle connector supporting portion 130a and expands the distance from the water bottle connector supporting portion 130a gradually as shown in Fig.16.

The reason why the water bottle supporting portion 110a moves as shown in Fig.16, is that the position of the rotation axis and the form of the slider guide are adjusted as the distance between the rotation axis and the slider guide 181 becomes the smallest at the start terminus of the slider guide 181 (the water bottle 10 is in the inversion condition) and as the distance between the rotation axis and the slider guide 181 becomes larger when the connector 183 goes to the end terminus of the slider guide 181. By this adjustment, the distance between the rotation axis and the slider guide 181 becomes the smallest at the start terminus of the slider guide 181 and the distance between the rotation axis and the slider guide 181 becomes larger when the connector 183 goes to the end terminus of the slider guide 181.

As shown above, the difference of the motion of the water bottle supporting portion 110a corresponding to the unit rotating mechanism 160 and the motion of the water bottle supporting portion 110a corresponding to the non-rotating diagonal shift mechanism 180 will generate the approaching motion and the receding motion between the water bottle connector 120a and the water bottle connector supporting portion 130a by the attaching and detaching slide mechanism 170. The relative moving distance between the water bottle supporting portion 110a and the water bottle connector supporting portion 130a should be adjusted enough for controlling the attaching and detaching of the water bottle 10 and the water bottle connector 120a.

Next, the operation for exchanging the water bottle 10 of the water server 100a of embodiment 2 is described below.

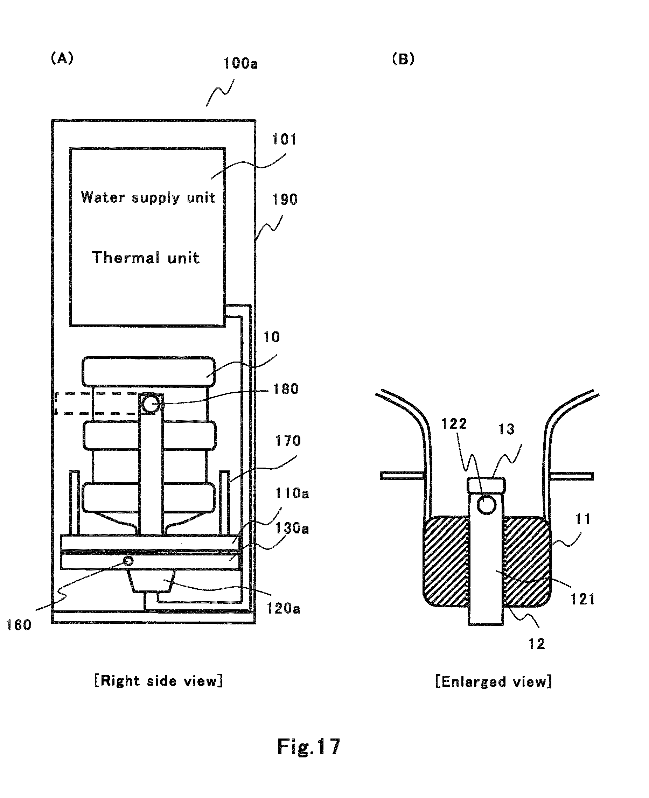

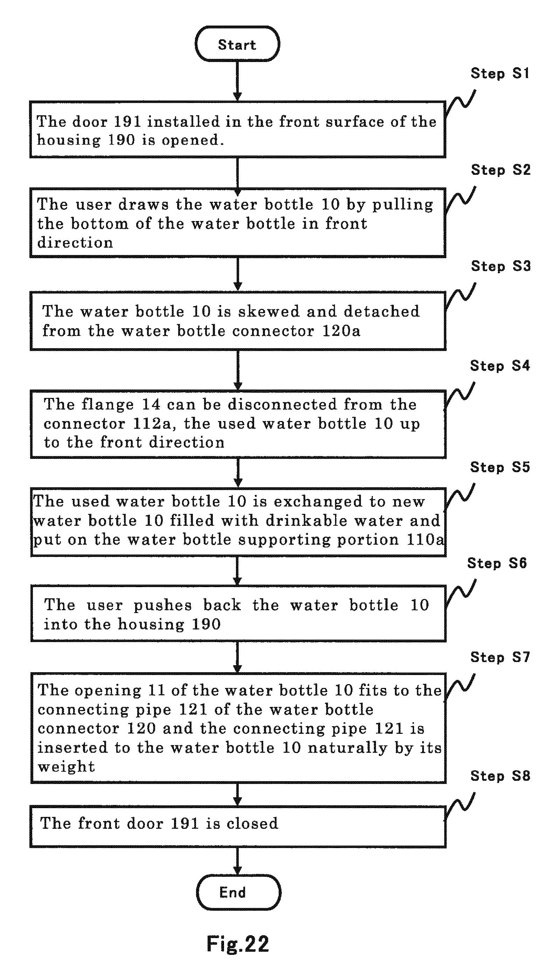

Fig.17 to Fig.21 show schematic views showing the exchange operation of the water bottle 10 simply. Fig.22 is a flow-chart showing the procedure for exchanging the water bottle 10 in the water server 100a of this embodiment 2.

Fig.17 is a schematic view showing the installed water bottle 10 in the basic status. The used water bottle 10 is installed in the water server 100a in the inverted status. The opening 11 is accepted to the water bottle acceptor 111a of the water bottle supporting portion 110a, the water bottle 10 is supported onto the water bottle supporting portion 110a in the inverted status. The flange 14 of the water bottle 10 is fit and fixed by the connector 112a of the water bottle supporting portion 110a.

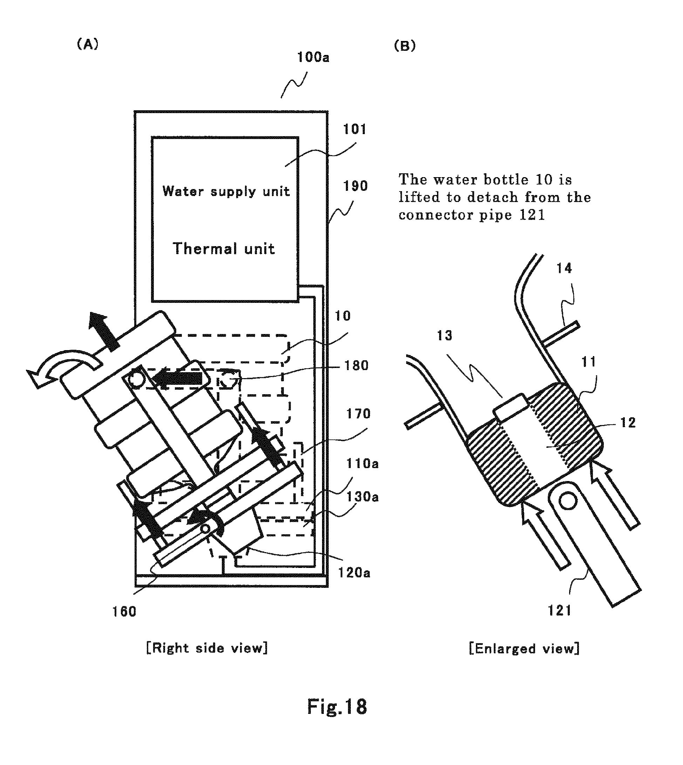

Next, Fig.18 is a schematic view showing the procedure for pulling and skewing the water bottle 10 in the front direction. If the water bottle 10 is drawn and skewed, the water bottle 10 skews, and the distance between the water bottle supporting portion 110a and the water bottle connector supporting portion 130a becomes large by the second water bottle connector attaching and detaching mechanism. The opening 11 of the water bottle 10 is detached from the connector pipe 121a of the water bottle connector 120a.

As the first step of the exchanging operation, the door installed in the front surface of the housing 190 is opened (Fig.22 step S1) (not shown in Figure). In this example, the water bottle 10 is installed in the front lower position around the knee of the user in the inverted status. As shown in Fig.18, the user draws the water bottle 10 by pulling the bottom of the water bottle in the inverted state in the front direction (Fig.22 step S2).

When the user skews the water bottle 10 in front direction, the pressure is conveyed to the water bottle supporting portion 110a and the water bottle connector supporting portion 130a, the second water bottle connector attaching and detaching mechanism will work corresponding to the motion of the water bottle 10.

The rotating motion controlled by the unit rotating mechanism 160 and the sliding motion controlled by the slider guide 181 of the non-rotating diagonal shift mechanism 180 are combined, the water bottle supporting portion 110a is rotating, and the distance from the water bottle connector supporting portion 130a is enlarged. The water bottle 10 is fixed to the water bottle supporting portion 110a firmly because the flange 14 of the water bottle 10 is fit and fixed by the connector 112a of the water bottle supporting portion 110a. On the other hand, the distance between the water bottle 10 and the water bottle connector 120a enlarges according to the enlarging of the distance between the water bottle supporting portion 110a and the water bottle connector supporting portion 130a.

If the connector pipe 121a comes out from the small hole 12, the water bottle 10 is detached from the water bottle connector 120a (Fig.22 step S3).

The skewing of the water bottle 10 in the front direction is accomplished as shown in Fig.18, the water bottle 10 comes out from the water bottle connector 120a, and the water bottle becomes ready to pick up and exchange.

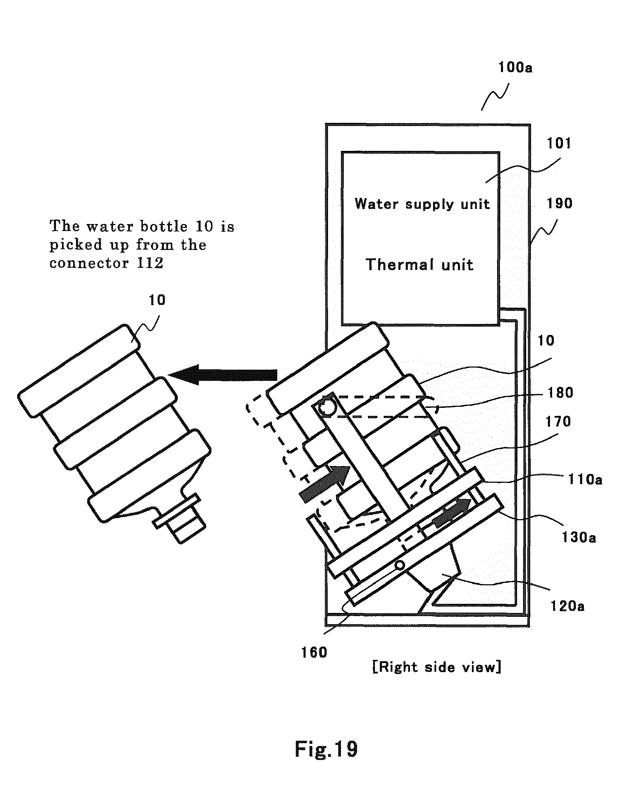

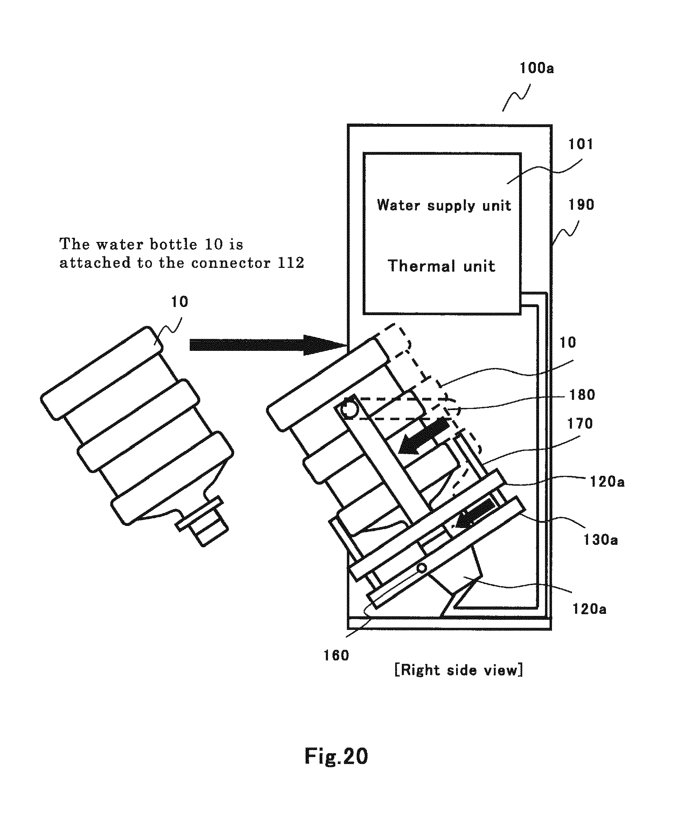

Fig.19 and Fig.20 are schematic views showing the procedure for detaching the used water bottle 10 from the water bottle supporting portion 110a and the procedure for exchanging and attaching the new water bottle 10 to the water bottle supporting portion 110a.

The water bottle 10 is located in the front lower position around the knee of the user in the inverted status and skewing status, and it is easy to pick up. In addition, the rotation axis 161 is decentered from the center portion of the water bottle connector supporting portion 130a to the front direction, the water bottle 10 protrudes in front and it is easy to pick up.

As shown in Fig.19, the flange 14 should be disconnected to the connector 112a for picking up the used water bottle 10 from the water bottle supporting portion 110a. The water bottle 10 can be disconnected from the connector 112a easily by sliding the water bottle 10 in order to disconnect the flange 14 from the connector 112a. The used water bottle 10 can be picked up after disconnecting flange 14 from the connector 112a (Fig.9 step S4). In this configuration, the flange 14 can be disconnected from the connector 112a first by sliding to the horseshoe open direction along the edge of the connector 112a, then pick the used water bottle 10 up to the front direction as shown in Fig.19 (Fig.22 step S4).

Next, as shown in Fig.20, the used water bottle 10 is exchanged with new water bottle 10 filled with drinkable water and put on the water bottle supporting portion 110a. The user just picks up the used water bottle and just puts on the new water bottle simply, and the user is not requested to disconnect or connect the water bottle 10 and the water bottle connector 120a.

The flange 14 of the new water bottle 10 should be connected to the connector 112a of the water bottle supporting portion 110a, in this configuration, the flange 14 of the water bottle 10 can be connected to the connector automatically, if the user simply puts the water bottle onto the connector 112a and slides the flange 14 of the water bottle 10 along the connector 112a naturally by its weight (Fig.22 step S5). The exchanged water bottle 10 is in the skewed and the inverted status.

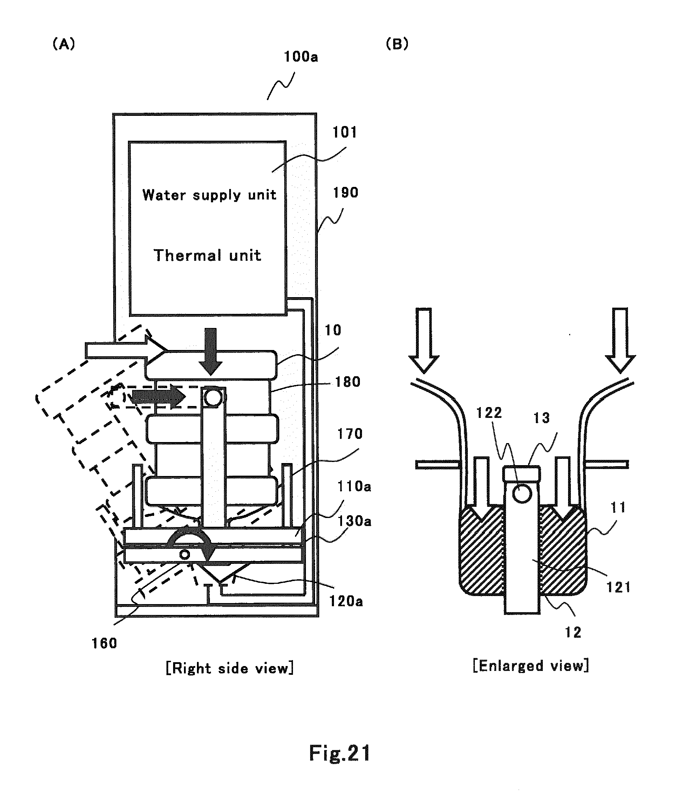

Next, Fig.21 is a schematic view showing the procedure for pushing back the new water bottle 10 into the housing as the new water bottle 10 is attached to the water bottle supporting portion 110a. This operation is the reverse of the operation shown in Fig.18.

As shown in Fig.21, if the user pushes back the water bottle 10 into the housing 190, the water bottle 10 turns its status from the skewed status to the inverted status (Fig.22 step S6). The weight of the water bottle 10 is applied to the water bottle supporting portion 110a. The water bottle supporting portion 110a rotates by the torque of the angular moment given by the water bottle 10 weight, and then the water bottle connector supporting portion 130a rotates from the rotating start position to the rotating terminal position via the unit rotating mechanism 160. Simultaneously, the motion given by the non-rotating diagonal shift mechanism 180 is superimposed to the motion given by the unit rotating mechanism 160. The difference between the motion given by the non-rotating diagonal shift mechanism 180 and the motion given by the unit rotating mechanism 160 generates the approaching motion and the receding motion between the water bottle connector 120 and the water bottle connector supporting portion 130 by the attaching and detaching slide mechanism 170.

As shown in Fig.21 (B), if the water bottle 10 rotates to the inner of the housing 190 and assumes the inverted state, the distance between the water bottle supporting portion 110a and the water bottle connector supporting portion 130a becomes small, the small hole 12 of the opening 11 of the water bottle 10 fits to the connecting pipe 121 of the water bottle connector 120, and the connecting pipe 121 is inserted to the water bottle 10 up to the correctly fixed connected position. The weight of the water bottle 10 filled with drinkable water is heavy, the small hole 12 of the opening 11 of the water bottle 10 fits to the connecting pipe 121 of the water bottle connector 120, and the connecting pipe 121 is inserted to the water bottle 10 naturally by its weight if the opening 11 is located at the connecting pipe 121 correctly (Fig.22 step S7).

The water bottle 10 will be stable on the water bottle connector 120a in the inverted status because the weight of the water bottle 10 filled with drinkable water is heavy.

The procedure shown above is the working of the water bottle exchanging mechanism. If the water bottle 10 is in the inverted state at the rotating start position of the unit rotating mechanism 170, the distance between the opening 11 of the water bottle 10 supported by the water bottle supporting portion 110a and the water connector 120a supported by the water connector supporting portion 130a becomes the distance for the water bottle to be connected to the water bottle connector 120a correctly. If the unit rotating mechanism 160 goes from the start position of the rotating motion to the terminal position of the rotating motion, the distance between the opening 11 of the water bottle 10 supported by the water bottle supporting portion 110a and the water connector 120a supported by the water connector supporting portion 130a becomes larger. Therefore, the opening 11 of the water bottle 10 will be disconnected from the water bottle connector 120a. The disconnection operation of the water bottle 10 from the water bottle connector 120a is accomplished by the motion of the water bottle connector supporting portion 130 given by the unit rotating mechanism 160 and by the motion of the water bottle supporting portion 120 given by the non-rotating diagonal shift mechanism 180.

As shown above, the water bottle connector 120 can be connected and disconnected to the opening 11 of the water bottle 10 automatically corresponding to the distance between the water bottle supporting portion 110a and the water bottle connecting portion 130a controlled by the working of the second water bottle connector attaching and detaching mechanism.

The water server achieves both the benefit of decreasing the load of the water bottle lift operation by installing the water bottle on the bottom of the apparatus and the benefit from the hygiene point of view by connecting the water bottle in the inverted condition to the water bottle connector directly. In addition, the water server improves the workability on the water bottle exchange by employing the improved mechanism for water bottle exchange. The water server can detach the opening of the water bottle from the water bottle connector automatically by the pulling operation of the used water bottle in the front direction, and the used water bottle is ready to pick up. The water server can attach the opening of the water bottle to the water bottle connector automatically by the pushing back operation of the new water bottle to the back direction. Therefore, the water bottle exchange operation becomes easy, even if the user is a lady or an older person or those with and injured lower back, the water bottle exchange operation can be accomplished easily.

While some preferable embodiments of the water server according to the present invention are described above, it should be understood that various changes are possible, without deviating from the technical scope according to the present invention. Therefore, the technical scope according to the present invention is limited only by the claims attached.

### Industrial applicability

The water server of the present invention can be applied to the water server for providing water by exchanging the used water bottle with the new water bottle. For example, it can be used as not only for commercial use but also for home use or general use. Also, the water server of the present invention can serve various liquid including mineral water, hot water, various beverages, coffee, tea, green tea, soup and so on.

## Claims

1. A water server which can serve drinkable water from a water bottle installed in an exchangeable state, comprising;
a water bottle supporting portion for supporting the water bottle in an inverted condition;
a water bottle connector supporting portion for supporting a water bottle connector for taking the drinkable water from the water bottle by connecting through an opening of the water bottle;
a water bottle connector attaching and detaching mechanism for controlling the distance between the opening of the water bottle supported by the water bottle supporting portion and the water bottle connector supported by the water bottle connector supporting portion, and controlling attaching and detaching the water bottle and the water bottle supporting portion;
wherein a drawing motion for drawing the water bottle in the front direction and a push back motion for pushing back the water bottle in the back direction are coupled to the controlling of the attaching and detaching the water bottle connector supporting portion and the water bottle supporting portion with the water bottle connector attaching and detaching mechanism, and the water bottle can be attached to and detached from the water bottle connector by the water bottle drawing operation and the water bottle push back operation.

2. A water server according to claim 1, in which the water bottle drawing operation and the water bottle push back operation are slide operations for sliding the water bottle in the front direction and in the back direction, and the water bottle connector attaching and detaching mechanism comprises: a unit slide mechanism for sliding a unit including the water bottle supporting portion and the water bottle connector supporting portion in the front direction and in the back direction; and an attaching and detaching slide mechanism for relatively moving the water bottle and the water bottle connector while facing each other, wherein the sliding motion by the unit slide mechanism and the attaching and detaching motion of the water bottle and the water bottle connector by the attaching and detaching slide mechanism are correlated with each other, and the water bottle can be attached to and detached from the water bottle connector by the water bottle sliding operation in the front direction and in the back direction.

3. A water server according to claim 2, in which the attaching and detaching slide mechanism comprises a connection structure for connecting a first connection part installed in the water connector or in the water connector supporting portion and the second connection part installed on the apparatus housing facing to the first connection part, wherein the moving in the vertical direction is generated compulsorily in the track of the slide motion of the first connection part or the second connection part by the unit slide mechanism, and the relative moving of the water bottle and the water bottle connector is generated corresponding to the slide motion by the unit slide mechanism.

4. A water server according to claim 3, in which the first connection part is a protrusion part, and the second connection part is a slit guide, wherein the moving of the vertical direction is generated on the water bottle connector compulsory in the track of the slide motion by forming the slit guide with a certain skew.

5. A water server according to claim 4, wherein the water bottle connector supporting portion provides a space for the water bottle connector allowing moving in the vertical direction but limiting moving in the horizontal direction and a space for the protrusion part connected to the slit guide allowing moving in the vertical direction.

6. A water server according to claim 3, in which the second connection part is a protrusion part, and the first connection part is a slit guide, wherein the moving of the vertical direction components is generated on the water bottle compulsory in the track of the slide motion by forming the slit guide with a certain skew.

7. A water server according to claim 1, in which the water bottle drawing operation and the water bottle push back operation are a rotating motion for pulling and skewing the water bottle in the front direction and for pushing and returning the water bottle in the back direction, and the water bottle connector attaching and detaching mechanism comprises: a unit rotating mechanism for rotating a unit including the water bottle supporting portion and the water bottle connector supporting portion around the axis of rotation; and an attaching and detaching slide mechanism for rotating the water bottle and the water bottle connector and relatively moving both as facing to each other, wherein the rotating motion by the unit rotating mechanism and the attaching and detaching motion of the water bottle and the water bottle connector by the attaching and detaching slide mechanism are coupled with each other, and the water bottle can be attached to and detached from the water bottle connector by the water bottle rotating operation by pulling in the front direction and pushing in the back direction.

8. A water server according to claim 7, in which the water bottle connector attaching and detaching mechanism further comprises a non-rotating diagonal shift mechanism for moving either the water bottle supporting portion or the water bottle connector supporting portion rotated by the unit rotating mechanism along the outer track outward from the rotation track of the unit rotating mechanism, wherein the unit rotating mechanism and the attaching and detaching slide mechanism are connected via the non-rotating diagonal shift mechanism.

9. A water server according to claim 8, wherein in the rotating motion for pulling and skewing the water bottle in the bottle exchanging operation, an approaching motion and a separating motion is generated between the water bottle connector and the water bottle connector supporting portion by the attaching and detaching slide mechanism which generates the difference between the water bottle connector and the water bottle connector supporting portion, wherein one is a rotating motion rotated along with the unit rotating mechanism, and the other is a non-rotating diagonal shifting motion along with the non-rotating diagonal shift mechanism.

10. A water server according to any one of claims 7 to 9, wherein
when the unit rotating mechanism is in the start position, the water bottle is in the inverted status, the distance between the water bottle supporting portion and the water connector supporting portion becomes the smallest, and the status of the water bottle and the water connector becomes the connected status; when the unit rotating mechanism rotates as much as to the termination of the rotary motion, the water bottle is pulled and skewed forward, the distance between the water bottle supporting portion and the water connector supporting portion becomes large, and the status of the water bottle and the water connector becomes the disconnected status.

11. A water server according to any one of claims 8 to 10, wherein the non-rotating diagonal shift mechanism comprises a guide slot, a sliding protrusion part for sliding in the guide slot, and a connector for connecting the sliding protrusion part and the water bottle supporting portion, wherein the position of the axis of rotation and the track of the guide slot are adjusted as the distance between the axis of rotation and the guide slot becomes smallest when the protrusion part is at the beginning of the guide slot, and the distance between the axis of rotation and the guide slot becomes large when the protrusion part slides as far as the terminus of the guide slot.

12. A water server according to claim 11, wherein the approaching speed and the receding speed between the opening of the water bottle and the water bottle connector supported by the water connector supporting portion in the rotating motion are adjusted by adjusting the track of the sliding guide or the installation angle of the sliding guide.

13. A water server according to any one of claims 7 to 12, wherein the axis of rotation is located in the decentered position to the termination side of the rotating motion by the unit rotating mechanism, not located in the position where the opening of the water bottle is fixed.

14. A water server according to any one of claims 7 to 13, wherein the housing door of the water server is installed in the front, the start position of the rotating motion of the unit rotating mechanism is located in the inner side of the back in the housing, and the terminus position of the rotating motion of the unit rotating mechanism is located in the inner side of the front in the housing.

15. A water server according to any one of claims 1 to 14, wherein the opening of the water bottle comprises a flange, the water bottle supporting portion comprises a flange grip portion for gripping the flange of the opening of the water bottle; and the move in vertical direction of the water bottle is blocked by fitting and connecting the flange of the opening of the water bottle and the flange grip portion of the water bottle supporting portion.

16. A water server according to any one of claims 1 to 15, wherein the water bottle supporting portion and the water bottle connector supporting portion are arrayed in the lower position of the water server housing, and the water bottle is installed in the lower position of the water server housing.

17. A water server according to claim 1, wherein the water bottle can be detached from the water bottle connector by the step for opening the housing door of the water server and the step for drawing the water bottle in the front direction and the water bottle becomes in the exchangeable status; the used water bottle is exchanged with the new water bottle; and the new water bottle can be attached to the water bottle connector by the step for pushing back the water bottle in the back direction and the water bottle assumes in the fixed state.

18. A water server according to claim 1, wherein the water bottle in the fixed state in the water server housing is that the water bottle is installed on the water bottle supporting portion in the inverted status and is fixed by attaching the opening of the water bottle to the water bottle connector, and the water bottle in the exchangeable state is that the water bottle is drawn in the front direction and skewed in the front direction to be exchanged easily.

19. A water server according to claim 1, wherein the water bottle in the fixed status in the water server housing is that the water bottle is installed on the water bottle supporting portion in the inverted state and is fixed by attaching the opening of the water bottle to the water bottle connector, and the water bottle in the exchangeable state is that the water bottle is drawn in the front direction with the water bottle supporting portion and the water bottle is skewed in the front direction to be exchanged easily.
